# EUROPÄISCHE PATENTANMELDUNG

(11) **EP 4 706 964 A2**
(43) Veröffentlichungstag der Anmeldung: **11.03.2026**
(21) Anmeldenummer: 26151238.8
(22) Anmeldetag: 17.03.2020
(51) Int. Cl.: B33Y 50/00

(54) **VERFAHREN ZUR ADDITIVEN FERTIGUNG WENIGSTENS EINES BAUTEILS DEFINIERTER BAUTEILEIGENSCHAFTEN**

(30) Priorität: 11.04.2019 DE 102019109655
(62) Teilanmeldung aus: 20712304.3
(71) Anmelder: Schubert Additive Solutions GmbH, 74564 Crailsheim (DE)
(72) Erfinder: SCHINDLER, Marcus, 74564 Crailsheim (DE)
(74) Vertreter: Hafner & Kohl PartmbB

(57) **Zusammenfassung**

Verfahren zur additiven Fertigung wenigstens eines Bauteils (2) definierter Bauteileigenschaften, umfassend die Schritte:
- Bereitstellen wenigstens eines zertifizierten Datensatzes (4), welcher von einem Bereitsteller für einen additiven Fertigungsprozess wenigstens eines bestimmten Bauteils (2) definierter Bauteileigenschaften zertifizierte bauteilspezifische Parameter und/oder anlagenspezifische Parameter und/oder prozessspezifische Parameter beinhaltet,
- Anwenden wenigstens eines additiven Fertigungsprozesses zur additiven Fertigung wenigstens eines bestimmten Bauteils (2) definierter Bauteileigenschaften auf Grundlage des wenigstens einen zertifizierten Datensatzes (4).

## Beschreibung

Die Erfindung betrifft ein Verfahren zur additiven Fertigung wenigstens eines Bauteils definierter Bauteileigenschaften.

Entsprechende Verfahren zur additiven Fertigung eines Bauteils definierter Bauteileigenschaften sind aus dem Stand der Technik in einer Vielzahl unterschiedlicher Ausführungen bekannt.

Wenngleich entsprechende Verfahren mittlerweile zur Herstellung von Bauteilen unterschiedlichster funktioneller und konstruktiver Konfiguration dem Grunde nach etabliert sind, bedarf es für die eigentliche additive Fertigung eines Bauteils definierter Bauteileigenschaften diverser Kenntnisse.

Entsprechende Kenntnisse umfassen insbesondere die Auswahl geeigneter anlagenspezifischer, bauteilspezifischer sowie prozessspezifischer Parameter, welche die additive Fertigung eines Bauteils definierter Bauteileigenschaften, d. h. insbesondere eine gewünschte Bauteilqualität, erst ermöglichen. Entsprechende Parameter müssen typischerweise für jedes additiv zu fertigende Bauteil erarbeitet werden, um gewünschte Bauteileigenschaften, d. h. insbesondere eine gewünschte Bauteilqualität, zuverlässig und reproduzierbar realisieren zu können.

Hieraus ergibt sich, dass die additive Fertigung eines Bauteils definierter Bauteileigenschaften im Einzelnen typischerweise mit erheblichem Aufwand verbunden ist, um entsprechende Parameter zu erhalten, vermittels welchen eine zuverlässige und reproduzierbare additive Fertigung eines Bauteils definierter Bauteileigenschaften erst möglich ist.

Der Erfindung liegt hiervon ausgehend die Aufgabe zugrunde, ein Verfahren anzugeben, welches einem Nutzer eine zuverlässige und reproduzierbare additive Fertigung eines Bauteils definierter Bauteileigenschaften, insbesondere ohne eigene Erarbeitung von für die additive Fertigung des jeweiligen Bauteils definierter Bauteileigenschaften erforderlicher Parameter, ermöglicht.

Die Aufgabe wird durch die Gegenstände der unabhängigen Ansprüche, d. h. insbesondere ein Verfahren zur additiven Fertigung eines Bauteils definierter Bauteileigenschaften gemäß dem unabhängigen Anspruch 1, gelöst. Die hierzu abhängigen Ansprüche betreffen mögliche Ausführungsformen der Gegenstände der unabhängigen Ansprüche.

Ein erster Aspekt der hierin beschriebenen Erfindung betrifft ein Verfahren zur additiven Fertigung bzw. Herstellung wenigstens eines Bauteils definierter Bauteileigenschaften. Das Verfahren umfasst demnach Methoden und/oder Prozesse zur additiven Fertigung bzw. Herstellung wenigstens eines Bauteils definierter Bauteileigenschaften.

Mit dem Verfahren lassen sich grundsätzlich die unterschiedlichsten Bauteile bzw. Bauteilgruppen additiv fertigen. Insbesondere lassen sich technische Bauteile bzw. Bauteilgruppen additiv fertigen. In diesem Zusammenhang können sowohl neu konstruierte technische Bauteile bzw. Bauteilgruppen als auch Ersatz- oder Nachrüstbauteile bzw. Ersatz- oder Nachrüstbauteilgruppen einer bestimmten technischen Einrichtung, wie z. B. einer Maschine, additiv gefertigt werden. Beispiele für technische Gebiete, in welchen sich verfahrensgemäß gefertigte Bauteile bzw. Bauteilgruppen und somit auch das hierin beschriebene Verfahren einsetzen lassen, sind das Gebiet der Automatisierung, Robotik, Handling, Verpackung, etc. Mithin lassen sich verfahrensgemäß z. B. Bauteile bzw. Bauteilgruppen für Automatisierungs-, Robotik-, Handlings- und Verpackungseinrichtungen additiv fertigen. Konkret kann es sich bei solchen Bauteilen bzw. Bauteilgruppen z. B. um Handhabungselemente, wie z. B. Greifelemente, Saugelemente, etc., handeln. Jeweilige Bauteile bzw. Bauteilgruppen können mit wenigstens einer, z. B. durch innere Strukturen, wie z. B. von einem Temperiermedium durchströmbaren Temperierkanalstrukturen, von einem Strömungsmedium durchströmbaren Strömungskanalstrukturen, etc., gebildeten, zusätzlichen Funktionalität gefertigt werden.

Das Verfahren umfasst die im Folgenden näher beschriebenen Schritte:
In einem ersten Schritt des Verfahrens erfolgt ein Bereitstellen wenigstens eines zertifizierten Datensatzes, welcher von einem Bereitsteller für einen additiven Fertigungsprozess wenigstens eines bestimmten Bauteils definierter Bauteileigenschaften zertifizierte anlagenspezifische Parameter und/oder bauteilspezifische Parameter und/oder prozessspezifische Parameter beinhaltet. In dem ersten Schritt des Verfahrens wird von einem Bereitsteller sonach wenigstens ein zertifizierter Datensatz bereitgestellt, welcher zertifizierte anlagenspezifische Parameter und/oder bauteilspezifische Parameter und/oder prozessspezifische Parameter für einen additiven Fertigungsprozess wenigstens eines Bauteils definierter Bauteileigenschaften beinhaltet. Der erste Schritt wird typischerweise von einem Bereitsteller durchgeführt.

Der wenigstens eine zertifizierte Datensatz beinhaltet typischerweise sämtliche erforderlichen anlagenspezifischen Parameter und/oder bauteilspezifischen Parameter und/oder prozessspezifischen Parameter, welche für die additive Fertigung eines bestimmten Bauteils definierter Bauteileigenschaften erforderlich sind. Mit anderen Worten liegen in dem wenigstens einen zertifizierten Datensatz sämtliche anlagenspezifischen und/oder bauteilspezifischen und/oder prozessspezifischen Informationen zur additiven Fertigung eines jeweiligen bestimmten Bauteils definierter Bauteileigenschaften, d. h. insbesondere auch maschinenlesbare Steuerinformationen zur Steuerung bzw. Regelung des Betriebs einer zur Durchführung eines additiven Fertigungsprozesses zur additiven Fertigung eines jeweiligen Bauteils definierter Bauteileigenschaften verwendeten additiven Fertigungseinrichtung, vor.

Mithin kann für jedwedes verfahrensgemäß zu fertigende bzw. gefertigte Bauteil ein eigener zertifizierter Datensatz bereitgestellt werden. Dies insbesondere deshalb, als zur Realisierung bestimmter Bauteileigenschaften bestimmte anlagenspezifische Parameter und/oder bauteilspezifische Parameter und/oder prozessspezifische Parameter erforderlich sind, mithin bestimmte Bauteileigenschaften mit bestimmten anlagenspezifischen Parametern und/oder bauteilspezifischen Parametern und/oder prozessspezifischen Parametern korreliert sein können, sodass nur eine bestimmte Kombination von anlagenspezifischen Parametern und/oder bauteilspezifischen Parametern und/oder prozessspezifischen Parametern eine zuverlässige und reproduzierbare additive Fertigung eines Bauteils definierter Bauteileigenschaften ermöglicht. Hieraus ergibt sich, dass der wenigstens eine zertifizierte Datensatz typischerweise eine bestimmte Kombination von anlagenspezifischen Parametern und/oder bauteilspezifischen Parametern und/oder prozessspezifischen Parametern zur Herstellung eines bestimmten Bauteils definierter Bauteileigenschaften beinhaltet.

Eine in dem wenigstens einen zertifizierten Datensatz enthaltene bestimmte Kombination entsprechender Parameter bezieht sich dabei typischerweise auf einen mit einer bestimmten additiven Fertigungseinrichtung durchführbaren bestimmten additiven Fertigungsprozess eines bestimmten Bauteils definierter Bauteileigenschaften. Der wenigstens eine zertifizierte Datensatz beinhaltet demnach typischerweise eine für einen bestimmten, mit einer bestimmten additiven Fertigungseinrichtung durchführbaren additiven Fertigungsprozess maßgeschneiderte Kombination an anlagenspezifischen Parametern und/oder bauteilspezifischen Parametern und/oder prozessspezifischen Parametern, welche Kombination eine zuverlässige und reproduzierbare additive Fertigung eines Bauteils definierter Bauteileigenschaften ermöglicht. Mithin können sich zertifizierte Datensätze zur Fertigung von Bauteilen derselben definierten Bauteileigenschaften dennoch in wenigstens einem anlagenspezifischen Parameter und/oder bauteilspezifischen Parameter und/oder prozessspezifischen Parameter unterscheiden, sofern diese unterschiedlichen additiven Fertigungsprozessen und/oder dem Betrieb unterschiedlicher additiver Fertigungseinrichtungen zugrunde gelegt werden.

Im Rahmen der Durchführung des Verfahrens stellt ein Nutzer des Verfahrens, welcher eine additive Fertigung eines Bauteils definierter Bauteileigenschaften vornehmen möchte, den wenigstens einen ihm durch einen Bereitsteller bereitgestellten zertifizierten Datensatz einer zur Durchführung eines additiven Fertigungsprozesses zur additiven Fertigung des jeweiligen Bauteils definierter Bauteileigenschaften verwendeten additiven Fertigungseinrichtung zur Verfügung, woraufhin der additive Fertigungsprozess zur Fertigung des jeweiligen Bauteils definierter Bauteileigenschaften ohne nutzerseitigen Eingriff, insbesondere vollautomatisch, allein auf Grundlage des wenigstens einen zertifizierten Datensatzes durchgeführt werden kann. Das Anwenden wenigstens eines additiven Fertigungsprozesses zur additiven Fertigung wenigstens eines bestimmten Bauteils definierter Bauteileigenschaften auf Grundlage des wenigstens einen zertifizierten Datensatzes vermittels einer nutzerseitigen additiven Fertigungseinrichtung kann sonach vollautomatisiert, insbesondere ohne einen nutzerseitigen Eingriff, erfolgen.

Der wenigstens eine zertifizierte Datensatz kann, wie bereits angedeutet, auch maschinenlesbare Steuerinformation zur, insbesondere vollautomatischen, Steuerung bzw. Regelung des Betriebs wenigstens einer additiven Fertigungseinrichtung zur additiven Fertigung des wenigstens einen additiv zu fertigenden Bauteils auf Grundlage des wenigstens einen zertifizierten Datensatzes beinhalten. Bei entsprechenden Steuerinformationen kann es sich z. B. um einen jeweiligen Maschinencode (G-Code) einer jeweiligen additiven Fertigungseinrichtung handeln. Entsprechende Steuerinformationen können unmittelbar oder mittelbar durch entsprechende in dem wenigstens einen zertifizierten Datensatz enthaltene anlagenspezifische Parameter und/oder bauteilspezifische Parameter und/oder prozessspezifische Parameter beschrieben werden.

Zur additiven Fertigung eines Bauteils definierter Bauteileigenschaften benötigt ein Nutzer demnach nur eine additive Fertigungseinrichtung, regelmäßig auch als "3D-Drucker" bezeichnet, und einen entsprechenden zertifizierten Datensatz, welcher der additiven Fertigungseinrichtung, d. h. typischerweise einer den Betrieb der additiven Fertigungseinrichtung steuernden bzw. regelnden hardware- und/oder software-mäßig implementierten Steuereinrichtung, datenmäßig zur Verfügung wird.

Ein Nutzer des Verfahrens muss - wie sich auch im Weiteren ergibt - sonach insbesondere keine Erarbeitung entsprechender Parameter vornehmen, welche ihm eine zuverlässige und reproduzierbare additive Fertigung eines jeweiligen Bauteils definierter Bauteileigenschaften ermöglichen, da sämtliche Parameter bereits in dem wenigstens einen dem additiven Fertigungsprozess zugrunde zulegenden zertifizierten Datensatz enthalten sind. Ein Nutzer des Verfahrens benötigt ferner keine eigenen Erfahrungen oder Kenntnisse im Bereich der additiven Fertigung, da sämtliches "Wissen" über die nutzerseitig angestrebte additive Fertigung eines jeweiligen Bauteils definierter Bauteileigenschaften in dem wenigstens einen zertifizierten Datensatz enthalten ist.

Dem ersten Schritt geht typischerweise voraus, dass ein Bereitsteller entsprechende zertifizierte anlagenspezifische Parameter und/oder bauteilspezifische Parameter und/oder prozessspezifische Parameter für einen additiven Fertigungsprozess definiert und datenmäßig in einem entsprechenden zertifizierten Datensatz zusammenfasst bzw. zusammengefasst hat. Mithin kann auch das Definieren entsprechender anlagenspezifischer Parameter und/oder bauteilspezifischer Parameter und/oder prozessspezifischer Parameter und das Zusammenfassen dieser in einem entsprechenden zertifizierten Datensatz einen Schritt des Verfahrens darstellen.

In einem zweiten Schritt des Verfahrens erfolgt ein Anwenden wenigstens eines additiven Fertigungsprozesses zur additiven Fertigung wenigstens eines bestimmten Bauteils definierter Bauteileigenschaften auf Grundlage des wenigstens einen in dem ersten Schritt bereitgestellten zertifizierten Datensatzes. Der zweite Schritt wird typischerweise durch einen Nutzer des Verfahrens durchgeführt.

In dem zweiten Schritt können grundsätzlich sämtliche additiven Fertigungsprozesse, d. h. insbesondere sämtliche pulver(bett)basierten additiven Fertigungsprozesse sowie sämtliche nicht pulver(bett)basierten additiven Fertigungsprozesse, angewendet werden. Ein in dem zweiten Schritt konkret angewendeter additiver Fertigungsprozess ist insbesondere durch die in dem jeweilig eingesetzten zertifizierten Datensatz enthaltenen anlagenspezifischen Parameter und/oder prozessspezifischen Parameter definiert.

In dem zweiten Schritt können, je nach konkret angewendetem additiven Fertigungsprozess, grundsätzlich verschiedene Baumaterialien, d. h. z. B. Metalle, Kunststoffe, etc., verarbeitet werden. Entsprechend kann in dem zweiten Schritt z. B. ein additiver Fertigungsprozess angewendet werden, in welchem ein auf Metall oder Kunststoff basierendes Baumaterial zur additiven Fertigung des wenigstens einen Bauteils verarbeitet bzw. verwendet wird. Insbesondere kann in dem zweiten Schritt ein Fused-Deposition-Modelling ("FDM")-Prozess angewendet werden, in welchem ein auf Kunststoff basierendes Baumaterial zur additiven Fertigung des wenigstens einen Bauteils verwendet wird. FDM-Prozesse zeichnen sich durch eine vergleichsweise hohe Baurate bei gleichzeitig sehr guten Bauteileigenschaften aus. Das Verfahren lässt sich jedoch auch mit anderen additiven Fertigungsprozessen, wie z. B. Binder-Jetting-Prozessen, Digital-Light-Synthesis-Prozessen, CLIP-Prozessen, SLM-Prozessen, SLS-Prozessen, SEBM-Prozessen, Stereolithographie-Prozessen, etc., realisieren.

Insgesamt liegt ein Verfahren vor, welches einem Nutzer eine zuverlässige und reproduzierbare additive Fertigung eines Bauteils definierter Bauteileigenschaften, insbesondere ohne eigene Erarbeitung von für die additive Fertigung des jeweiligen Bauteils definierter Bauteileigenschaften erforderlicher Parameter, ermöglicht. Das Verfahren legt damit zugleich den Grundstein für eine neue Art der additiven Fertigung On-Demand.

Das Verfahren kann auch das Bereitstellen eines zertifizierten Datensatzes, welcher von einem Bereitsteller für die Vorbereitung eines additiven Fertigungsprozesses des oder wenigstens eines bestimmten Bauteils definierter Bauteileigenschaften zertifizierte anlagenspezifische Parameter und/oder bauteilspezifische Parameter und/oder prozessspezifische Parameter beinhaltet, sowie das Anwenden wenigstens einer Maßnahme zur Vorbereitung des oder wenigstens eines additiven Fertigungsprozesses zur additiven Fertigung wenigstens eines bestimmten Bauteils definierter Bauteileigenschaften auf Grundlage des wenigstens einen zertifizierten Datensatzes beinhaltet, umfassen. Ein Nutzer benötigt sonach (auch) keine eigenen Kenntnisse über eine entsprechende vorbereitende Maßnahme, als sämtliches hierzu erforderliches "Wissen" in dem wenigstens einen zertifizierten Datensatz enthalten sein kann. Hierin kann ein eigenständiger Erfindungsaspekt gesehen werden.

Die wenigstens eine Maßnahme zur Vorbereitung des auf Grundlage des wenigstens einen zertifizierten Datensatzes angewendeten additiven Fertigungsprozesses kann z. B. eine Maßnahme zur Vorbereitung eines im Rahmen des zur additiven Fertigung eines Bauteils bestimmter Bauteileigenschaften durchgeführten additiven Fertigungsprozesses zu verwendenden Baumaterials, insbesondere eine Temperierung, Trocknung, Inertisierung, etc. des Baumaterials, umfassen. Die Maßnahme ist typischerweise im Hinblick auf einen konkret anzuwendenden additiven Fertigungsprozess bzw. ein im Rahmen der Durchführung eines konkret anzuwendenden additiven Fertigungsprozesses konkret eingesetzten Baumaterials gewählt. Beispielsweise können z. B. pulver(bett)basierte additive Fertigungsprozesse andere vorbereitende Maßnahmen erfordern, als nicht pulver(bett)basierte additive Fertigungsprozesse.

Das Verfahren kann auch das Bereitstellen eines zertifizierten Datensatzes, welcher von einem Bereitsteller für die Nachbereitung des oder wenigstens eines additiven Fertigungsprozesses wenigstens eines bestimmten Bauteils definierter Bauteileigenschaften zertifizierte anlagenspezifische Parameter und/oder bauteilspezifische Parameter und/oder prozessspezifische Parameter beinhaltet, sowie das Anwenden wenigstens einer Maßnahme zur Nachbereitung des oder wenigstens eines additiven Fertigungsprozesses zur additiven Fertigung wenigstens eines bestimmten Bauteils definierter Bauteileigenschaften auf Grundlage des zertifizierten Datensatzes, umfassen. Ein Nutzer benötigt sonach (auch) keine eigenen Kenntnisse über eine entsprechende nachbereitende Maßnahme, als sämtliches hierzu erforderliches "Wissen" in dem wenigstens einen zertifizierten Datensatz enthalten sein kann. Hierin kann ebenso ein eigenständiger Erfindungsaspekt gesehen werden.

Die wenigstens eine Maßnahme zur Nachbereitung des additiven Fertigungsprozesses kann eine Maßnahme zur Nachbearbeitung des im Rahmen des auf Grundlage des wenigstens einen zertifizierten Datensatzes angewendeten additiven Fertigungsprozesses additiv gefertigten Bauteils, insbesondere eine mechanische und/oder thermische Nachbehandlung des additiv gefertigten Bauteils, wie z. B. eine zumindest abschnittsweise mechanische Oberflächenbearbeitung zur Erzeugung bestimmter Oberflächeneigenschaften, eine zumindest abschnittsweise thermische Behandlung zur Erzeugung bestimmter struktureller Eigenschaften, etc., umfassen. Die Maßnahme ist typischerweise im Hinblick auf einen konkret angewendeten additiven Fertigungsprozess bzw. ein im Rahmen der Durchführung eines konkret angewendeten additiven Fertigungsprozesses konkret eingesetzten Baumaterials gewählt. Beispielsweise können z. B. vermittels pulver(bett)basierten additiven Fertigungsprozessen gefertigte Bauteile andere nachbereitende Maßnahmen erfordern, als nicht vermittels pulver(bett)basierten additiven Fertigungsprozessen gefertigte Bauteile. Gleichermaßen können z. B. aus Metall gefertigte Bauteile andere nachbereitende Maßnahmen erfordern, als aus Kunststoff gefertigte Bauteile.

Es ist ebenso denkbar, dass ein zertifizierter Datensatz 4, 4', 4" sowohl von einem Bereitsteller für einen additiven Fertigungsprozess wenigstens eines bestimmten Bauteils definierter Bauteileigenschaften zertifizierte anlagenspezifische Parameter und/oder bauteilspezifische Parameter und/oder prozessspezifische Parameter als auch von einem Bereitsteller für die Vorbereitung und/oder Nachbereitung eines additiven Fertigungsprozesses des oder wenigstens eines bestimmten Bauteils definierter Bauteileigenschaften zertifizierte anlagenspezifische Parameter und/oder bauteilspezifische Parameter und/oder prozessspezifische Parameter beinhaltet.

Nachfolgend werden in nicht abschließender Aufzählung Beispiele für, insbesondere bereitstellerseitig, zertifizierbare bzw. zertifizierte bauteilspezifische Parameter gegeben, welche in dem wenigstens einen zertifizierten Datensatz enthalten sein können.

Der wenigstens eine zertifizierte Datensatz kann als bauteilspezifischen Parameter z. B. wenigstens einen geometrisch-konstruktiven Parameter des wenigstens einen additiv zu fertigenden Bauteils, insbesondere alle geometrisch-konstruktiven Parameter des wenigstens einen additiv zu fertigenden Bauteils, beinhalten. Der wenigstens eine zertifizierte Datensatz kann sonach einen oder mehrere, insbesondere sämtlichen, geometrisch-konstruktiven Parameter, d. h. z. B. Abmessungen, Form, Volumen, etc., des wenigstens einen additiv zu fertigenden Bauteils beinhalten. Die geometrisch-konstruktiven Eigenschaften des wenigstens einen additiv zu fertigenden Bauteils und die sich hieraus ergebende konstruktive wie auch funktionelle Gestaltung des wenigstens einen additiv zu fertigenden Bauteils können sonach durch den wenigstens einen zertifizierten Datensatz, insbesondere vollständig, definiert sein bzw. werden.

Der wenigstens eine zertifizierte Datensatz kann als bauteilspezifischen Parameter alternativ oder ergänzend wenigstens einen chemischen Parameter des wenigstens einen additiv zu fertigenden Bauteils, insbesondere alle chemischen Parameter des wenigstens einen additiv zu fertigenden Bauteils, beinhalten. Der wenigstens eine zertifizierte Datensatz kann sonach einen oder mehrere, insbesondere sämtlichen, chemischen Parameter, d. h. z. B. chemische Alterung, insbesondere in bestimmten chemischen Umgebungen, chemische Reaktivität, insbesondere in bestimmten chemischen Umgebungen, chemische Verträglichkeit mit bestimmten Medien, chemische Zusammensetzung, etc., des wenigstens einen additiv zu fertigenden Bauteils beinhalten. Die chemischen Eigenschaften des wenigstens einen additiv zu fertigenden Bauteils können sonach durch den wenigstens einen zertifizierten Datensatz, insbesondere vollständig, definiert sein bzw. werden.

Der wenigstens eine zertifizierte Datensatz kann als bauteilspezifischen Parameter alternativ oder ergänzend wenigstens einen physikalischen Parameter des wenigstens einen additiv zu fertigenden Bauteils, insbesondere alle physikalischen Parameter des wenigstens einen additiv zu fertigenden Bauteils, beinhalten. Der wenigstens eine zertifizierte Datensatz kann sonach einen oder mehrere, insbesondere sämtlichen, physikalischen Parameter, d. h. z. B. elektrische Parameter, wie z. B. elektrische Leitfähigkeit, mechanische Parameter, wie z. B. Festigkeit, Härte, Duktilität, etc., thermische Parameter, wie z. B. Wärmeleitfähigkeit, Wärmekapazität, etc., tribologische Parameter, wie z. B. Rauigkeit, sowie sonstige physikalischen Parameter, wie z. B. Dichte, Masse, etc., des wenigstens einen additiv zu fertigenden Bauteils beinhalten. Die physikalischen Eigenschaften des wenigstens einen additiv zu fertigenden Bauteils können sonach durch den wenigstens einen zertifizierten Datensatz, insbesondere vollständig, definiert sein bzw. werden.

Nachfolgend werden in nicht abschließender Aufzählung Beispiele für, insbesondere bereitstellerseitig, zertifizierbare bzw. zertifizierte anlagenspezifische Parameter gegeben, welche in dem wenigstens einen zertifizierten Datensatz enthalten sein können.

Der wenigstens eine zertifizierte Datensatz kann als anlagenspezifischen Parameter z. B. wenigstens einen Abmessungsparameter, wie z. B. Länge, Breite, Form, etc., wenigstens eines Baufelds bzw. einer Bauebene wenigstens einer zur additiven Fertigung des wenigstens einen additiv zu fertigenden Bauteils zu verwendenden oder verwendeten additiven Fertigungseinrichtung, insbesondere alle Abmessungsparameter wenigstens eines Baufelds wenigstens einer zur additiven Fertigung des wenigstens einen additiv zu fertigenden Bauteils zu verwendenden oder verwendeten additiven Fertigungseinrichtung, beinhalten. Die Abmessungen wenigstens eines Baufelds bzw. einer Bauebene wenigstens einer zur additiven Fertigung des wenigstens einen additiv zu fertigenden Bauteils zu verwendenden oder verwendeten additiven Fertigungseinrichtung können sonach durch den wenigstens einen zertifizierten Datensatz, insbesondere vollständig, definiert sein bzw. werden.

Der wenigstens eine zertifizierte Datensatz kann als anlagenspezifischen Parameter alternativ oder ergänzend wenigstens einen Abmessungsparameter, wie z. B. Länge, Breite, Höhe bzw. Tiefe, Raumform, wenigstens eines Bauvolumens wenigstens einer zur additiven Fertigung des wenigstens einen additiv zu fertigenden Bauteils zu verwendenden oder verwendeten additiven Fertigungseinrichtung, insbesondere alle Abmessungsparameter wenigstens eines Bauvolumens wenigstens einer zur additiven Fertigung des wenigstens einen additiv zu fertigenden Bauteils zu verwendenden oder verwendeten additiven Fertigungseinrichtung, beinhalten. Die Abmessungen wenigstens eines Bauvolumens wenigstens einer zur additiven Fertigung des wenigstens einen additiv zu fertigenden Bauteils zu verwendenden oder verwendeten additiven Fertigungseinrichtung können sonach durch den wenigstens einen zertifizierten Datensatz, insbesondere vollständig, definiert sein bzw. werden.

Der wenigstens eine zertifizierte Datensatz kann als anlagenspezifischen Parameter alternativ oder ergänzend wenigstens einen Fertigungsparameter, wie z. B. einen die Baurate beeinflussenden Bauratenparameter, einen einen Materialvorschubvorgang eines in einem Baufeld bzw. Bauvolumen selektiv anzuordnenden, insbesondere strangartigen bzw. -förmigen, Baumaterials beeinflussenden Vorschubparameter, einen einen Aufbring- bzw. Beschichtungsvorgang eines in einem Baufeld aufzubringenden, insbesondere pulverartigen bzw. -förmigen, Baumaterials beeinflussenden Aufbring- bzw. Beschichtungsparameter, einen einen Belichtungs- bzw. Bestrahlungsvorgang eines in einem Baufeld aufgebrachten, zu belichtenden bzw. zu bestrahlenden Baumaterials vermittels wenigstens eines Energiestrahls - wie z. B. eines Elektronen- oder Laserstrahls -, insbesondere zum Zwecke der selektiven Verfestigung und/oder zum Zwecke der selektiven Temperierung des Baumaterials, beeinflussenden Belichtungs- bzw. Bestrahlungsparameter, d. h. z. B. Energiestrahlanzahl, Energiestrahlintensität bzw. -leistung, Energiestrahlfokusgröße, Energiestrahlfokusposition, etc., wenigstens einer zur additiven Fertigung des wenigstens einen additiv zu fertigenden Bauteils zu verwendenden oder verwendeten additiven Fertigungseinrichtung, insbesondere alle Fertigungsparameter wenigstens einer zur additiven Fertigung des wenigstens einen additiv zu fertigenden Bauteils zu verwendenden oder verwendeten additiven Fertigungseinrichtung, beinhalten. Die Fertigungsparameter wenigstens einer zur additiven Fertigung des wenigstens einen additiv zu fertigenden Bauteils zu verwendenden oder verwendeten additiven Fertigungseinrichtung können sonach durch den wenigstens einen zertifizierten Datensatz, insbesondere vollständig, definiert sein bzw. werden.

Der wenigstens eine zertifizierte Datensatz kann als anlagenspezifischen Parameter alternativ oder ergänzend wenigstens einen Anlagentypparameter, insbesondere einen Baureihen-, Modell-, Typ- und/oder Herstellerparameter, wenigstens einer zur additiven Fertigung des wenigstens einen additiv zu fertigenden Bauteils zu verwendenden oder verwendeten additiven Fertigungseinrichtung, insbesondere alle Anlagentypparameter wenigstens einer zur additiven Fertigung des wenigstens einen additiv zu fertigenden Bauteils zu verwendenden oder verwendeten additiven Fertigungseinrichtung, beinhalten. Die Anlagentypparameter wenigstens einer zur additiven Fertigung des wenigstens einen additiv zu fertigenden Bauteils zu verwendenden oder verwendeten additiven Fertigungseinrichtung können sonach durch den wenigstens einen zertifizierten Datensatz, insbesondere vollständig, definiert sein bzw. werden.

Nachfolgend werden in nicht abschließender Aufzählung Beispiele für, insbesondere bereitstellerseitig, zertifizierbare bzw. zertifizierte prozessspezifische Parameter gegeben, welche in dem wenigstens einen zertifizierten Datensatz enthalten sein können.

Der wenigstens eine zertifizierte Datensatz kann als prozessspezifischen Parameter wenigstens einen Baumaterialparameter, insbesondere die chemische und/oder physikalische Zusammensetzung eines Baumaterials, die Pulvergrößenverteilung und/oder Pulvermorphologie eines Baumaterialpulvers, sofern ein pulverartiges bzw. -förmiges Baumaterial eingesetzt wird, Abmessungen bzw. Querschnittsgeometrie eines Baumaterialstrangs, sofern ein strangartig bzw. -förmiges Baumaterial eingesetzt wird, die Viskosität eines flüssigen Baumaterials, sofern ein flüssiges Baumaterial eingesetzt wird, den Reinheitsgrad bzw. Rezyklierungsanteil eines Baumaterials, das Mischungsverhältnis eines Baumaterials, sofern ein mehrere unterschiedliche Baumaterialkomponenten umfassendes Baumaterial eingesetzt wird, etc., wenigstens eines Baumaterials, welches von wenigstens einer zur additiven Fertigung des wenigstens einen additiv zu fertigenden Bauteils zu verwendenden oder verwendeten additiven Fertigungseinrichtung zur additiven Fertigung einsetzbar ist bzw. eingesetzt wird, insbesondere alle Baumaterialparameter wenigstens eines Baumaterials, welches von wenigstens einer zur additiven Fertigung des wenigstens einen additiv zu fertigenden Bauteils zu verwendenden oder verwendeten additiven Fertigungseinrichtung zur additiven Fertigung einsetzbar ist, beinhalten. Die Baumaterialparameter wenigstens eines zur additiven Fertigung des wenigstens einen additiv zu fertigenden Bauteils zu verwendenden oder verwendeten Baumaterials können sonach durch den wenigstens einen zertifizierten Datensatz, insbesondere vollständig, definiert sein bzw. werden.

Der wenigstens eine zertifizierte Datensatz kann als prozessspezifischen Parameter alternativ oder ergänzend wenigstens einen chemischen Prozessparameter, insbesondere eine chemische Atmosphäre, wie z. B. eine inerte Atmosphäre, innerhalb wenigstens eines Bau- und/oder Prozessraums bzw. -volumens wenigstens einer zur additiven Fertigung des wenigstens einen additiv zu fertigenden Bauteils zu verwendenden oder verwendeten additiven Fertigungseinrichtung, insbesondere alle chemischen Prozessparameter wenigstens eines Bau- und/oder Prozessraums bzw. -volumens wenigstens einer zur additiven Fertigung des wenigstens einen additiv zu fertigenden Bauteils zu verwendenden oder verwendeten additiven Fertigungseinrichtung, beinhalten. Die chemischen Prozessparameter innerhalb wenigstens eines Bau- und/oder Prozessraums bzw. -volumens wenigstens einer zur additiven Fertigung des wenigstens einen additiv zu fertigenden Bauteils zu verwendenden oder verwendeten additiven Fertigungseinrichtung können sonach durch den wenigstens einen zertifizierten Datensatz, insbesondere vollständig, definiert sein bzw. werden.

Der wenigstens eine zertifizierte Datensatz kann als prozessspezifischen Parameter alternativ oder ergänzend wenigstens einen physikalischen Prozessparameter, insbesondere Feuchtigkeit, Druck, Temperatur, etc., außerhalb und/oder innerhalb wenigstens eines Bau- und/oder Prozessraums bzw. -volumens wenigstens einer zur additiven Fertigung des wenigstens einen additiv zu fertigenden Bauteils zu verwendenden oder verwendeten additiven Fertigungseinrichtung, insbesondere alle physikalischen Prozessparameter wenigstens eines Bau- und/oder Prozessraums wenigstens einer zur additiven Fertigung des wenigstens einen additiv zu fertigenden Bauteils zu verwendenden oder verwendeten additiven Fertigungseinrichtung, beinhalten. Die physikalischen Prozessparameter außerhalb und/oder innerhalb wenigstens eines Bau- und/oder Prozessraums bzw. -volumens wenigstens einer zur additiven Fertigung des wenigstens einen additiv zu fertigenden Bauteils zu verwendenden oder verwendeten additiven Fertigungseinrichtung können sonach durch den wenigstens einen zertifizierten Datensatz, insbesondere vollständig, definiert sein bzw. werden.

Der wenigstens eine zertifizierte Datensatz kann als prozessspezifischen Parameter alternativ oder ergänzend wenigstens einen klimatischen Prozessparameter, insbesondere Feuchtigkeit, Druck, Temperatur, außerhalb und/oder innerhalb wenigstens einer Umgebung wenigstens einer zur additiven Fertigung des wenigstens einen additiv zu fertigenden Bauteils zu verwendenden oder verwendeten additiven Fertigungseinrichtung, insbesondere alle klimatischen Prozessparameter wenigstens einer zur additiven Fertigung des wenigstens einen additiv zu fertigenden Bauteils zu verwendenden oder verwendeten additiven Fertigungseinrichtung, beinhalten. Die klimatischen Prozessparameter innerhalb wenigstens einer Umgebung wenigstens einer zur additiven Fertigung des wenigstens einen additiv zu fertigenden Bauteils zu verwendenden oder verwendeten additiven Fertigungseinrichtung können sonach durch den wenigstens einen zertifizierten Datensatz, insbesondere vollständig, definiert sein bzw. werden.

Der wenigstens eine zertifizierte Datensatz kann als prozessspezifischen Parameter alternativ oder ergänzend wenigstens einen eine Aufteilung des wenigstens einen additiv zu fertigenden Bauteils in einzelne, jeweils einen Querschnitt des wenigstens einen additiv zu fertigenden Bauteils beinhaltende Schichten beschreibenden Schichtparameter (Slice-Parameter), wie z. B. Schichtanzahl, Schichtdicke, Schichtfläche, etc., insbesondere alle eine Aufteilung des wenigstens einen additiv zu fertigenden Bauteils in einzelne, jeweils einen Querschnitt des wenigstens einen additiv zu fertigenden Bauteils beinhaltenden Schichten beschreibende Schichtparameter, beinhalten. Die Schichtparameter (Slice-Parameter) können sonach durch den wenigstens einen zertifizierten Datensatz, insbesondere vollständig, definiert sein bzw. werden.

Der wenigstens eine zertifizierte Datensatz kann als prozessspezifischen Parameter alternativ oder ergänzend wenigstens einen Parameter, insbesondere einen geometrisch-konstruktiven Parameter und/oder einen Anordnungs- und/oder Ausrichtungsparameter relativ zu einem zu stützenden additiv zu fertigenden oder gefertigten Bauteil, wenigstens eines zur Unterstützung des wenigstens einen additiv zu fertigenden oder gefertigten Bauteils dienenden Stützelements (Supportelements), insbesondere alle Parameter wenigstens eines zur Unterstützung des wenigstens einen additiv zu fertigenden oder gefertigten Bauteils dienenden Stützelements, beinhalten. Die Parameter wenigstens eines zur Unterstützung des wenigstens einen additiv zu fertigenden oder gefertigten Bauteils dienenden Stützelements (Supportelements) können sonach durch den wenigstens einen zertifizierten Datensatz, insbesondere vollständig, definiert sein bzw. werden.

Der wenigstens eine zertifizierte Datensatz kann als prozessspezifischen Parameter alternativ oder ergänzend wenigstens einen eine Baustrategie, d. h. insbesondere eine Baumaterialaufbringstrategie, eine Belichtungs- oder Bestrahlungsstrategie, etc., des wenigstens einen additiv zu fertigenden Bauteils beschreibenden Baustrategieparameter, insbesondere alle eine Baustrategie des wenigstens einen additiv zu fertigenden Bauteils beschreibenden Baustrategieparameter, beinhalten. Die Baustrategieparameter des wenigstens einen additiv zu fertigenden Bauteils beschreibenden Baustrategieparameter können sonach durch den wenigstens einen zertifizierten Datensatz, insbesondere vollständig, definiert sein bzw. werden.

Der wenigstens eine zertifizierte Datensatz kann, wie erwähnt, wenigstens einen, insbesondere alle, geometrisch-konstruktiven Parameter wenigstens eines zur Unterstützung des wenigstens einen additiv zu fertigenden oder gefertigten Bauteils dienenden Stützelements (Supportelements) als prozessspezifischen Parameter beinhalten. Dabei kann das wenigstens eine Stützelement mit wenigstens einem ein Entfernen des wenigstens einen Stützelements von dem additiv gefertigten Bauteil erleichternden Strukturelement, insbesondere einer, z. B. durch eine Sollbruchstelle realisierten, Schwächung des wenigstens einen Stützelements, und/oder mit einer das zu entfernende Stützelement, z. B. farblich, von dem additiv gefertigten Bauteil abhebenden, optisch hervorhebenden Kennzeichnung, versehen sein bzw. werden. In dem wenigstens einen zertifizierten Datensatz können sonach im Zusammenhang mit entsprechenden auszubildenden Strukturelementen auch Informationen enthalten sein, welche die spätere Handhabung, d. h. insbesondere die Entfernung von Stützelementen, eines auf Grundlage des wenigstens einen zertifizierten Datensatzes additiv gefertigten Bauteils betreffen, als diese das, insbesondere additive, Ausbilden entsprechender Strukturelemente beinhalten.

**In** einer Ausführungsform kann ein Vergleichen wenigstens eines im Rahmen der additiven Fertigung des wenigstens einen additiv zu fertigenden Bauteils definierter Bauteileigenschaften vermittels einer, z. B. optischen, Erfassungseinrichtung erfassten, die additive Fertigung des wenigstens einen additiv zu fertigenden Bauteils betreffenden Parameters mit wenigstens einem, insbesondere korrespondierenden, Referenzparameter, bei welchem es sich insbesondere um einen durch den wenigstens einen zertifizierten Datensatz beschriebenen anlagenspezifischen Parameter und/oder bauteilspezifischen Parameter und/oder prozessspezifischen Parameter handelt, erfolgen. Mithin kann ein aktuell durchgeführter additiver Fertigungsprozess, insbesondere in Echtzeit, gegen einen durch den wenigstens einen zertifizierten Datensatz beschriebenen additiven Fertigungsprozess geprüft werden. Derart kann eine Überwachung eines auf Grundlage des wenigstens einen zertifizierten Datensatzes erfolgenden additiven Fertigungsprozesses realisiert werden.

**In** dieser Ausführungsform kann ferner ein Auswerten der Vergleichsinformation im Hinblick auf wenigstens ein Auswertekriterium, insbesondere dahin, ob dieses eine Über- oder Unterschreitung wenigstens eines parameterspezifischen Grenzwerts oder Grenzwertbereichs anzeigt, und ein Erzeugen einer das jeweilige Auswerteergebnis beschreibenden Auswerteinformation erfolgen. Die Auswerteinformation kann insbesondere angeben, ob bzw. inwieweit das additiv gefertigte Bauteil wenigstens einem, insbesondere durch den wenigstens einen Grenzwert oder Grenzwertbereich definierten, Auswertekriterium genügt oder nicht genügt. Das Ausgeben kann über ein Ausgaben einer entsprechenden Auswerteinformation an einer, insbesondere akustischen und/oder optischen und/oder haptischen, Ausgabeeinrichtung, d. h. z. B. einem Display, und/oder über ein datenmäßiges Übertragen einer entsprechenden Auswerteinformation an wenigstens einen Kommunikationspartner erfolgen.

**In** einer Ausführungsform kann der wenigstens eine zertifizierte Datensatz bereitstellerseitig erzeugt werden bzw. worden sein. Dabei kann der wenigstens eine zertifizierte Datensatz seitens des Bereitstellers z. B. auf Grundlage von Informationen des Bereitstellers, insbesondere auf Grundlage von seitens des Bereitstellers, bevorzugt unter definierten Fertigungsbedingungen, gegebenenfalls empirisch bzw. iterativ gewonnenen, Fertigungsergebnissen eines dem additiv zu fertigenden Bauteil entsprechenden Referenzbauteils, erzeugt werden oder worden sein. Der wenigstens eine zertifizierte Datensatz kann sonach auf der additiven Fertigung eines Referenzbauteils mit definierten Bauteileigenschaften, welche (exakt) den Bauteileigenschaften eines verfahrensgemäß zu fertigenden Bauteils entsprechen, basieren. Mithin können diejenigen anlagenspezifischen Parameter und/oder bauteilspezifischen Parameter und/oder prozessspezifischen Parameter, auf Grundlage welcher ein bestimmtes Referenzbauteil definierter Bauteileigenschaften zuverlässig und reproduzierbar gefertigt wurde, d. h. insbesondere alle anlagenspezifischen Parameter und/oder bauteilspezifischen Parameter und/oder prozessspezifischen Parameter, auf Grundlage welcher ein bestimmtes Referenzbauteil definierter Bauteileigenschaften zuverlässig und reproduzierbar gefertigt wurde, als zertifizierter Datensatz für die additive Fertigung eines dem Referenzbauteil (exakt) entsprechenden additiv zu fertigenden Bauteils verwendet werden bzw. in dem wenigstens einen zertifizierten Datensatz enthalten sein. Mit anderen Worten können die in dem wenigstens einen zertifizierten Datensatz enthaltenen anlagenspezifischen Parameter und/oder bauteilspezifischen Parameter und/oder prozessspezifischen Parameter als im Rahmen der additiven Fertigung eines bestimmten Referenzbauteils definierter Bauteileigenschaften unter bestimmten - typischerweise ebenso durch den zertifizierten Datensatz abgebildeten - anlagenspezifischen und/oder bauteilspezifischen und/oder prozessspezifischen Gegebenheiten erprobte Parameter erachtet werden. Hieraus ergibt sich der bereits erwähnte Aspekt, dass ein Nutzer des Verfahrens keine eigene Erarbeitung entsprechender Parameter vornehmen muss, welche ihm eine zuverlässige und reproduzierbare additive Fertigung eines jeweiligen Bauteils definierter Bauteileigenschaften ermöglichen, da sämtliche Parameter bereits in dem dem additiven Fertigungsprozess zugrunde zulegenden wenigstens einen zertifizierten Datensatz enthalten sind.

In einer weiteren Ausführungsform kann der wenigstens eine zertifizierte Datensatz jedoch ursprünglich auch durch einen Nutzer bzw. einen Dritten - hierbei handelt es sich um eine natürliche oder juristische Person, welche als externer Dienstleister entsprechende Datensätze bereitstellt, ohne eigens additive Bauteile fertigen zu wollen - erzeugt werden bzw. worden sein. Es ist demnach denkbar, dass der wenigstens eine zertifizierte Datensatz seitens des Nutzers bzw. des Dritten auf Grundlage von Informationen des Nutzers bzw. des Dritten, insbesondere auf Grundlage seitens des Nutzers bzw. des Dritten, bevorzugt unter definierten Fertigungsbedingungen, gegebenenfalls empirisch bzw. iterativ gewonnenen, Fertigungsergebnissen eines dem additiv zu fertigenden Bauteil (exakt) entsprechenden Referenzbauteils, erzeugt wird oder wurde.

In dieser Ausführungsform werden die seitens des Nutzers bzw. des Dritten als (potentieller) zertifizierter Datensatz bereitgestellten Informationen durch den Bereitsteller jedoch im Hinblick auf wenigstens ein bereitstellerseitig vorgebbares oder vorgegebenes Autorisierungskriterium, d. h. z. B. ein Sicherheitskriterium, Qualitätskriterium, etc., geprüft und nur bei positiver Autorisierung durch den Bereitsteller als zertifizierter Datensatz autorisiert.

In einer Ausführungsform kann das Prüfen kann ein Vergleichen wenigstens eines in dem zu autorisierenden Datensatz enthaltenen anlagenspezifischen Parameters und/oder bauteilspezifischen Parameters und/oder prozessspezifischen Parameters mit wenigstens einem, insbesondere jeweilig korrespondierenden, anlagenspezifischen und/oder bauteilspezifischen und/oder prozessspezifischen Referenzparameter sowie ein Erzeugen einer das jeweilige Vergleichsergebnis beschreibenden Vergleichsinformation umfassen.

In einer Ausführungsform kann das Autorisieren weiterhin ein Auswerten der Vergleichsinformation im Hinblick auf wenigstens ein Auswertekriterium, insbesondere dahin, ob dieses eine Über- oder Unterschreitung wenigstens eines parameterspezifischen Grenzwerts oder Grenzwertbereichs anzeigt, umfassen. Beispielsweise kann ein bauteilspezifischer Grenzwert bzw. Grenzwertbereich bestimmte geometrisch-konstruktive, chemische und/oder physikalische Eigenschaften betreffen, wobei ein Autorisieren nur bei deren Einhaltung erfolgt. Durch einen entsprechenden Grenzwert bzw. Grenzwertbereich kann ein zu erfüllendes Sicherheits- bzw. Qualitätskriterium definiert werden.

In einer Ausführungsform kann das Autorisieren im Weiteren ein Ausgeben wenigstens einer das Auswerte- bzw. Autorisierungsergebnis beschreibenden Auswerte- bzw. Autorisierungsinformation umfassen. Das Ausgeben einer entsprechenden Auswerte- bzw. Autorisierungsinformation kann über ein Ausgeben einer entsprechenden Auswerte- bzw. Autorisierungsinformation über eine, insbesondere akustische und/oder optische und/oder haptische, Ausgabeeinrichtung, d. h. z. B. ein Display, und/oder über ein datenmäßiges Übertragen einer entsprechenden Auswerteinformation an wenigstens einen Kommunikationspartner erfolgen.

In einer weiteren Ausführungsform, kann der wenigstens eine zertifizierte Datensatz eine bestimmte Anzahl, insbesondere eine Maximalanzahl, an auf Grundlage des wenigstens einen zertifizierten Datensatzes vermittels einer bestimmten additiven Fertigungsvorrichtung möglichen additiven Fertigungsvorgängen beinhalten. **In** dem wenigstens einen zertifizierten Datensatz kann sonach bestimmt sein, wie viele additiv zu fertigende Bauteile auf Grundlage des wenigstens einen zertifizierten Datensatzes maximal additiv gefertigt werden können. Der wenigstens eine zertifizierte Datensatz kann hardware- und/oder softwaretechnisch demnach so konfiguriert sein, dass mit diesem nur eine bestimmte Anzahl an Bauteilen definierter Bauteileigenschaften gefertigt werden können. Derart verfügt der Bereitsteller über eine Kontrollmöglichkeit im Zusammenhang mit der Nutzung des wenigstens einen zertifizierten Datensatzes, was ebenso eine probate Maßnahme gegen eine unautorisierte Verwendung des wenigstens einen zertifizierten Datensatzes darstellen kann.

In einer weiteren Ausführungsform kann der wenigstens eine zertifizierte Datensatz, insbesondere die darin enthaltenen anlagenspezifischen Parameter und/oder bauteilspezifischen Parameter und/oder prozessspezifischen Parameter, von einem Nutzer nicht veränderbar sein. Der wenigstens eine zertifizierte Datensatz kann hardware- und/oder softwaretechnisch demnach so konfiguriert sein, d. h. insbesondere vor nutzerseitigen Veränderungen geschützt sein, dass ein Nutzer keine Änderungen an dem wenigstens einen zertifizierten Datensatz vornehmen kann. Dies kann z. B. über einen Schreibschutz der in dem wenigstens einen zertifizierten Datensatz enthaltenen Parameter realisiert sein. Der wenigstens eine zertifizierte Datensatz kann derart vor ungewünschten Manipulationen geschützt werden.

In einer weiteren Ausführungsform kann der wenigstens eine zertifizierte Datensatz verschlüsselt sein bzw. werden. Der wenigstens eine zertifizierte Datensatz kann hardware- und/oder softwaretechnisch demnach so konfiguriert sein, dass ein Schlüssel erforderlich ist, um diesen zu nutzen. Ein Nutzer kann den wenigstens einen zertifizierten Datensatz sonach nur nutzen, wenn er über einen entsprechenden Schlüssel zum Entschlüsseln verfügt. Ein entsprechender Schlüssel kann durch den Bereitsteller an einen Nutzer bereitgestellt werden. Die Bereitstellung eines entsprechenden Schlüssels kann mit dem Vorliegen einer einen erfolgreichen Bezahlvorgang eines Nutzers beschreibenden Bezahlinformation verknüpft sein.

In einer weiteren Ausführungsform kann der wenigstens eine zertifizierte Datensatz durch den Bereitsteller auf einem mit wenigstens einem Kommunikationsnetzwerk verbindbaren oder verbundenen Datenspeicher, insbesondere einem Server, gegebenenfalls einem Cloud-Server, bereitgestellt werden, von welchem er von einem Nutzer abgerufen werden kann oder wird. Ein entsprechender Datenspeicher kann dem Bereitsteller zugeordnet sein; ein entsprechender Datenspeicher kann sonach im Bereich einer bereitstellerseitig verwalteten Daten- bzw. Kommunikationsinfrastruktur vorhanden sein. Bei dem Kommunikationsnetzwerk kann es sich um ein globales oder um ein lokales Kommunikationsnetzwerk, mithin z. B. um das Internet oder um ein Intranet, handeln. Durch das Bereitstellen des wenigstens einen zertifizierten Datensatzes auf einem entsprechenden Datenspeicher kann einem Nutzer grundsätzlich unabhängig von Ort und Zeit ein Abruf ermöglicht werden. Jedwede zwischen dem Datenspeicher und dem Nutzer hergestellte Kommunikationsverbindung kann verschlüsselt sein.

In einer Ausführungsform kann das Abrufen des wenigstens einen zertifizierten Datensatzes von dem wenigstens einen Datenspeicher über eine, gegebenenfalls nutzerindividuell konfigurierbare bzw. konfigurierte, datenspeicherseitige Benutzeroberfläche bzw. -schnittstelle erfolgen. Der Zugang zu einer entsprechenden Benutzeroberfläche bzw. -schnittstelle kann durch einen Loginvorgang eines Nutzers erfolgen. Sämtliche nutzerseitigen Interaktionen mit dem wenigstens einen Datenspeicher können z. B. über in nutzerseitigen (portablen) Endgeräten, wie z. B. Computer, Laptop, Smartphone, Tablet-PC, Smartwatch, Smartbrille, etc., implementierten web-basierte Anwendungen, wie z. B. bestimmte Software (Apps), Browser, etc., erfolgen.

In einer weiteren Ausführungsform kann der wenigstens eine zertifizierte Datensatz von einem Nutzer (nur) abgerufen werden, sofern, insbesondere datenspeicherseitig, eine einen (erfolgreichen) Bezahlvorgang des Nutzers beschreibende Bezahlinformation vorliegt. Ein Bezahlvorgang kann ein Bezahlvorgang für einen einmaligen Zugriff auf den Datenspeicher zum Abruf wenigstens eines bestimmten zertifizierten Datensatzes sein. Ein Bezahlvorgang kann jedoch - im Sinne eines Abonnements - auch ein Bezahlvorgang für einen mehrmaligen Zugriff auf den Datenspeicher zum Abruf wenigstens eines bestimmten zertifizierten Datensatzes innerhalb eines bestimmten Zeitraums, d. h. z. B. wenigstens einer Stunde, wenigstens eines Tags, wenigstens eines Monats, wenigstens eines Jahrs, etc., sein.

Ein Bezahlvorgang kann prinzipiell auf jedwede Weise vorgenommen werden. Der Nutzer kann Bezahlvorgänge z. B. konventionell durch Überweisen eines bestimmten Geldbetrags auf ein Geldkonto des Bereitstellers oder über geeignete Bezahldienste an einen virtuellen Zahlungsempfänger, d. h. z. B. über ein Internet-Zahlungsportal, vornehmen. Es ist auch denkbar, dass ein entsprechender Bezahldienst z. B., gegebenenfalls als eigenes Nutzersubmenü, in eine datenspeicherseitige Benutzeroberfläche bzw. -schnittstelle integriert ist. Ein entsprechender Bezahldienst kann alternativ oder ergänzend z. B. auch als Software ("App") für ein benutzerseitiges (portables) Endgerät, z. B. Computer, Laptop, Smartphone, Tablet-PC, Smartwatch, Smartbrille, etc., implementiert sein.

In einer weiteren Ausführungsform kann der wenigstens eine zertifizierte Datensatz auf ein nutzerseitiges Zugriffsportal abgerufen bzw. auf einem solchen abgespeichert werden, von welchem er wiederum auf wenigstens eine nutzerseitige additive Fertigungseinrichtung abrufbar ist. Mithin kann sich ein Nutzer - insoweit unabhängig von dem Bereitsteller - in einer eigenen nutzerseitig verwalteten Daten- bzw. Kommunikationsinfrastruktur ein Zugriffsportal einrichten, von welchem zertifizierte Datensätze auf wenigstens eine nutzerseitige additive Fertigungseinrichtung abgerufen werden können. Über das nutzerseitige Zugriffsportal können sonach (nur) solche zertifizierten Datensätze bereitgestellt und abgerufen werden, welche für den jeweiligen Nutzer, z. B. aufgrund eines bestimmten Bauteilprogramms in technischen Einrichtungen des Nutzers, relevant sind. Beispielsweise können über ein Zugriffsportal eines Nutzers aus dem Bereich der Verpackungstechnik nur solche zertifizierten Datensätze bereitgestellt und abgerufen werden, welche in den Verpackungsmaschinen des Nutzers tatsächlich verbaute Bauteile betreffen. Ein entsprechendes Zugriffsportal kann als, gegebenenfalls web-basierte, Plug-In-Lösung für eine nutzerseitig verwaltete Daten- bzw. Kommunikationsinfrastruktur vorliegen, sodass eine nutzerseitig verwaltete verwalteten Daten- bzw. Kommunikationsinfrastruktur auf einfache Weise um ein entsprechendes Zugriffsportal erweitert werden kann.

In einer weiteren Ausführungsform kann der wenigstens eine auf einem nutzerseitigen Zugriffsportal abgespeicherte zertifizierte Datensatz, auf wenigstens eine additive Fertigungseinrichtung eines Kunden des Nutzers abrufbar sein. Dies kann wiederum an das Vorliegen einer einen Bezahlvorgang eines Kunden des Nutzers an den Nutzer und/oder Bereitsteller beschreibenden Bezahlinformation geknüpft sein bzw. werden.

In einer weiteren Ausführungsform kann der wenigstens eine zertifizierte Datensatz und/oder ein nutzerseitiges Zugriffsportal, insbesondere als, gegebenenfalls web-basierte, Plug-In-Lösung, auf einem portablen, an einen Nutzer aushändigbaren oder ausgehändigten, insbesondere kommunikations- bzw. netzwerkfähigen, Datenträger, wie z. B. einem USB-Stick, CD-ROM, Speicherkarte, etc., bereitgestellt werden, von welchem er von einem Nutzer abgerufen wird oder werden kann.

Ein entsprechender kommunikations- bzw. netzwerkfähiger Datenträger kann eingerichtet sein, den additiven Fertigungsprozess betreffende Daten, d. h. z. B. Statusdaten, Fehlerdaten, etc. an einen Kommunikationspartner, d. h. z. B. den Bereitsteller, zu übertragen. Die Übertragung dieser Daten kann wiederum verschlüsselt erfolgen.

Ein entsprechender Datenträger kann an einen Nutzer ausgehändigt werden, sofern eine einen Bezahlvorgang des Nutzers beschreibende Bezahlinformation vorliegt. Die vorstehenden Ausführungen im Zusammenhang mit entsprechenden Bezahlinformationen und Bezahlvorgängen gelten analog.

In einer weiteren Ausführungsform kann im Rahmen des Anwendens des wenigstens einen additiven Fertigungsprozesses zur additiven Fertigung des oder wenigstens eines bestimmten Bauteils definierter Bauteileigenschaften auf Grundlage des wenigstens einen zertifizierten Datensatzes auf einer, insbesondere bereitstellerseitigen und/oder nutzerseitigen, Ausgabeeinrichtung, wie z. B. einem Display, wenigstens eine den Status des jeweiligen additiven Fertigungsprozesses betreffende Statusanzeige erzeugt und ausgegeben werden. Eine entsprechende Statusanzeige ermöglicht, gegebenenfalls in Echtzeit, eine Überwachung eines auf Grundlage des wenigstens einen zertifizierten Datensatzes durchgeführten additiven Fertigungsprozesses.

Ein weiterer, gegebenenfalls eigenständiger, Aspekt der hierin beschriebenen Erfindung betrifft ein Verfahren zur Erzeugung bzw. Herstellung wenigstens eines zertifizierten Datensatzes, welcher, insbesondere von einem Bereitsteller, für die additive Fertigung wenigstens eines bestimmten Bauteils definierter Bauteileigenschaften zertifizierte anlagenspezifische Parameter und/oder bauteilspezifische Parameter und/oder prozessspezifische Parameter beinhaltet. Dieses Verfahren zeichnet sich dadurch aus, dass der wenigstens eine zertifizierte Datensatz, insbesondere seitens des Bereitstellers, auf Grundlage von Informationen des Bereitstellers, insbesondere auf Grundlage seitens des Bereitstellers, bevorzugt unter definierten Fertigungsbedingungen, empirisch bzw. iterativ gewonnenen Fertigungsergebnissen eines dem additiv zu fertigenden Bauteil entsprechenden Referenzbauteils, erzeugt bzw. hergestellt wird oder wurde. Alternativ kann der wenigstens eine zertifizierte Datensatz seitens des Nutzers oder eines Dritten auf Grundlage auf von Informationen des Nutzers bzw. des Dritten, insbesondere auf Grundlage seitens des Nutzers bzw. des Dritten, bevorzugt unter definierten Fertigungsbedingungen, empirisch bzw. iterativ gewonnenen Fertigungsergebnissen eines dem additiv zu fertigenden Bauteil entsprechenden Referenzbauteils, erzeugt werden oder worden sein. In diesem Fall werden die Informationen des Nutzers bzw. des Dritten typischerweise seitens des Bereitstellers im Hinblick auf wenigstens ein bereitstellerseitig vorgebbares oder vorgegebenes Autorisierungskriterium geprüft und (nur) bei erfolgter Autorisierung durch den Bereitsteller als zertifizierter Datensatz verwendet. Sämtliche Ausführungen im Zusammenhang mit dem Verfahren zur additiven Fertigung eines Bauteils definierter Bauteileigenschaften gelten analog für dieses Verfahren und umgekehrt.

Ein weiterer, gegebenenfalls eigenständiger, Aspekt der hierin beschriebenen Erfindung betrifft ein System zur additiven Fertigung wenigstens eines bestimmten Bauteils definierter Bauteileigenschaften. System ist insbesondere zur Durchführung des hierin beschriebenen Verfahrens zur additiven Fertigung eines Bauteils definierter Bauteileigenschaften eingerichtet. Das System umfasst wenigstens eine einem Bereitsteller zuordenbare oder zugeordnete hardware- und/oder softwaremäßig implementierte Bereitstellungseinrichtung, welche zum Bereitstellen wenigstens eines zertifizierten Datensatzes, welcher von dem Bereitsteller für die additive Fertigung wenigstens eines bestimmten Bauteils definierter Bauteileigenschaften zertifizierte anlagenspezifische Parameter und/oder bauteilspezifische Parameter und/oder prozessspezifische Parameter beinhaltet, eingerichtet ist, sowie wenigstens eine einem Nutzer zuordenbare oder zugeordnete additive Fertigungseinrichtung, welche zum Anwenden wenigstens eines additiven Fertigungsprozesses zur additiven Fertigung wenigstens eines bestimmten Bauteils definierter Bauteileigenschaften auf Grundlage wenigstens eines bereitgestellten zertifizierten Datensatzes eingerichtet ist. Sämtliche Ausführungen im Zusammenhang mit dem Verfahren zur additiven Fertigung eines Bauteils definierter Bauteileigenschaften gelten analog für das System und umgekehrt.

Das System, d. h. insbesondere die Bereitstellungseinrichtung, kann ferner zum Bereitstellen eines zertifizierten Datensatzes, welcher von einem Bereitsteller für die Vorbereitung eines additiven Fertigungsprozesses des oder wenigstens eines bestimmten Bauteils definierter Bauteileigenschaften zertifizierte bauteilspezifische Parameter und/oder anlagenspezifische Parameter und/oder prozessspezifische Parameter beinhaltet, eingerichtet sein. Selbstverständlich kann das System auch zum Anwenden wenigstens einer Maßnahme zur Vorbereitung des oder wenigstens eines additiven Fertigungsprozesses zur additiven Fertigung wenigstens eines bestimmten Bauteils definierter Bauteileigenschaften auf Grundlage des zertifizierten Datensatzes eingerichtet sein. Hierfür kann das System geeignete Einrichtungen, d. h. z. B. Temperiereinrichtungen, Trocknungseinrichtungen, Inertisierungseinrichtungen, etc. zur Durchführung entsprechender vorbereitender Maßnahmen umfassen.

Das System kann ferner wenigstens eine, insbesondere optische, Erfassungseinrichtung, d. h. z. B. eine Kamera, umfassen. Das System kann dabei eingerichtet sein, ein Vergleichen wenigstens eines im Rahmen der additiven Fertigung des wenigstens einen additiv zu fertigenden Bauteils definierter Bauteileigenschaften vermittels der wenigstens einen Erfassungseinrichtung erfassten, die additive Fertigung des wenigstens einen additiv zu fertigenden Bauteils betreffenden Parameters mit wenigstens einem, insbesondere korrespondierenden, Referenzparameter, bei welchem es sich insbesondere um einen durch den wenigstens einen zertifizierten Datensatz beschriebenen anlagenspezifischen Parameter und/oder bauteilspezifischen Parameter und/oder prozessspezifischen Parameter handelt, durchzuführen. Mithin kann ein aktueller additiver Fertigungsprozess gegen den durch den wenigstens einen zertifizierten Datensatz beschriebenen additiven Fertigungsprozess geprüft werden. Derart kann eine Überwachung eines auf Grundlage des wenigstens einen zertifizierten Datensatzes erfolgenden additiven Fertigungsprozesses realisiert werden.

Das System kann ferner einer hardware- und/oder softwaremäßig implementierte Auswerteeinrichtung umfassen. Das System, d. h. insbesondere die wenigstens eine Auswerteeinrichtung, kann eingerichtet sein, ein Auswerten der Vergleichsinformation im Hinblick auf wenigstens ein Auswertekriterium, insbesondere dahin, ob dieses eine Über- oder Unterschreitung wenigstens eines parameterspezifischen Grenzwerts oder Grenzwertbereichs anzeigt, und ein Erzeugen einer das jeweilige Auswerteergebnis beschreibenden Auswerteinformation durchzuführen. Die Auswerteinformation kann insbesondere angeben, ob bzw. inwieweit das additiv gefertigte Bauteil wenigstens einem, insbesondere durch den wenigstens einen Grenzwert oder Grenzwertbereich definierten, Auswertekriterium genügt oder nicht genügt. Das Ausgeben kann über ein Ausgaben einer entsprechenden Auswerteinformation an einer, insbesondere akustischen und/oder optischen und/oder haptischen, Ausgabeeinrichtung, d. h. z. B. einem Display, und/oder über ein datenmäßiges Übertragen einer entsprechenden Auswerteinformation an wenigstens einen Kommunikationspartner erfolgen. Das System kann sonach auch wenigstens eine entsprechende Ausgabeeinrichtung umfassen.

Das System, d. h. insbesondere die Bereitstellungseinrichtung, kann ferner zum Bereitstellen eines zertifizierten Datensatzes, welcher von einem Bereitsteller für die Nachbereitung des oder wenigstens eines additiven Fertigungsprozesses wenigstens eines bestimmten Bauteils definierter Bauteileigenschaften zertifizierte bauteilspezifische Parameter und/oder anlagenspezifische Parameter und/oder prozessspezifische Parameter beinhaltet, eingerichtet sein. Selbstverständlich kann das System auch zum Anwenden wenigstens einer Maßnahme zur Nachbereitung des oder wenigstens eines additiven Fertigungsprozesses zur additiven Fertigung wenigstens eines bestimmten Bauteils definierter Bauteileigenschaften auf Grundlage des zertifizierten Datensatzes eingerichtet sein. Hierfür kann das System geeignete Einrichtungen, d. h. z. B. thermische Behandlungseinrichtungen, mechanische Bearbeitungseinrichtungen, etc. zur Durchführung entsprechender nachbereitender Maßnahmen umfassen.

Das System, d. h. insbesondere die wenigstens eine additive Fertigungseinrichtung, kann derart eingerichtet sein, dass das Anwenden wenigstens eines additiven Fertigungsprozesses zur additiven Fertigung wenigstens eines bestimmten Bauteils definierter Bauteileigenschaften auf Grundlage des zertifizierten Datensatzes vermittels einer nutzerseitigen additiven Fertigungseinrichtung vollautomatisiert, insbesondere ohne einen nutzerseitigen Eingriff, erfolgt. Das System kann eine hardware- und/oder software-mäßig implementierte Autorisierungseinrichtung zur Autorisierung eines seitens eines Nutzers oder eines Dritten bereitgestellten (potentiellen) zertifizierten Datensatzes umfassen. Die Autorisierungseinrichtung ist insbesondere eingerichtet, entsprechende Informationen des Nutzers bzw. des Dritten im Hinblick auf wenigstens ein bereitstellerseitig vorgebbares oder vorgegebenes Autorisierungskriterium zu prüfen werden und nur bei positiver Autorisierung durch den Bereitsteller als zertifizierter Datensatz zu autorisieren.

Das System, d. h. insbesondere die Bereitstellungseinrichtung, kann hardware- und/oder software-mäßig eingerichtet sein, den wenigstens einen zertifizierte Datensatz derart zu konfigurieren, dass dieser eine bestimmte Anzahl an auf Grundlage des zertifizierten Datensatzes vermittels einer bestimmten additiven Fertigungsvorrichtung möglichen additiven Fertigungsvorgängen beinhaltet.

Das System, d. h. insbesondere die Bereitstellungseinrichtung, kann hardware- und/oder software-mäßig eingerichtet sein, den wenigstens einen zertifizierte Datensatz derart zu konfigurieren, dass der wenigstens eine zertifizierte Datensatz, insbesondere dessen Inhalt, von einem Nutzer nicht veränderbar ist.

Das System, d. h. insbesondere die Bereitstellungseinrichtung, kann hardware- und/oder software-mäßig eingerichtet sein, den wenigstens einen zertifizierte Datensatz derart zu konfigurieren, dass der wenigstens eine zertifizierte Datensatz verschlüsselt ist.

Das System kann einen mit wenigstens einem Kommunikationsnetzwerk verbindbaren oder verbundenen Datenspeicher, insbesondere einen Server, gegebenenfalls einen Cloud-Server, umfassen, auf welchem der wenigstens eine zertifizierte Datensatz bereitstellbar ist, und von welchem der wenigstens eine zertifizierte Datensatz von einem Nutzer abgerufen werden kann oder wird.

Der wenigstens eine Datenspeicher kann hardware- und/oder software-mäßig eingerichtet sein, dass der wenigstens eine zertifizierte Datensatz von einem Nutzer abgerufen werden kann, sofern, insbesondere datenspeicherseitig, eine einen erfolgreichen Bezahlvorgang des Nutzers beschreibende Bezahlinformation vorliegt.

Das System kann ferner ein nutzerseitiges Zugriffsportal umfassen, sodass der wenigstens eine zertifizierte Datensatz auf das nutzerseitige Zugriffsportal abgerufen wird oder werden kann.

Der wenigstens eine zertifizierte Datensatz und/oder ein nutzerseitiges Zugriffsportal kann, insbesondere als Plug-In-Lösung, auf einem portablen, an einen Nutzer aushändigbaren oder ausgehändigten Datenträger bereitgestellt sein, von welchem er von einem Nutzer abgerufen wird oder werden kann.

Das System kann ferner wenigstens eine, insbesondere bereitstellerseitige und/oder nutzerseitige, Ausgabeeinrichtung, d. h. insbesondere eine, z. B. als Display ausgebildete, Ausgabeeinrichtung umfassen, sodass im Rahmen des Anwendens des wenigstens einen additiven Fertigungsprozesses zur additiven Fertigung des oder wenigstens eines bestimmten Bauteils definierter Bauteileigenschaften auf Grundlage des zertifizierten Datensatzes auf der Ausgabeeinrichtung wenigstens eine den Status des jeweiligen additiven Fertigungsprozesses betreffende Statusanzeige erzeugbar oder erzeugt ist.

Die wenigstens eine additive Fertigungseinrichtung kann z. B. zur Durchführung eines additiven Fertigungsprozesses, in welchem ein auf Kunststoff basierendes Baumaterial zur additiven Fertigung des wenigstens einen Bauteils verwendet wird, eingerichtet sein. Insbesondere kann die wenigstens eine additive Fertigungseinrichtung als Fused-Deposition-Modelling ("FDM")-Einrichtung ausgebildet sein oder wenigstens eine solche umfassen. Selbstverständlich sind anders konfigurierte additive Fertigungseinrichtungen ebenso denkbar.

Die Erfindung ist anhand von Ausführungsbeispielen in den Zeichnungen näher erläutert. Dabei zeigt:
- Fig. 1, 2: jeweils eine Prinzipdarstellung eines Systems zur additiven Fertigung eines Bauteils definierter Bauteileigenschaften gemäß einem Ausführungsbeispiel;
- Fig. 3: eine Prinzipdarstellung einer an einer Ausgabeeinrichtung ausgebbaren Auswerteinformation;
- Fig. 4: eine Prinzipdarstellung einer Benutzeroberfläche eines nutzerseitigen Zugriffsportals; und
- Fig. 5: eine Prinzipdarstellung einer Statusanzeige.

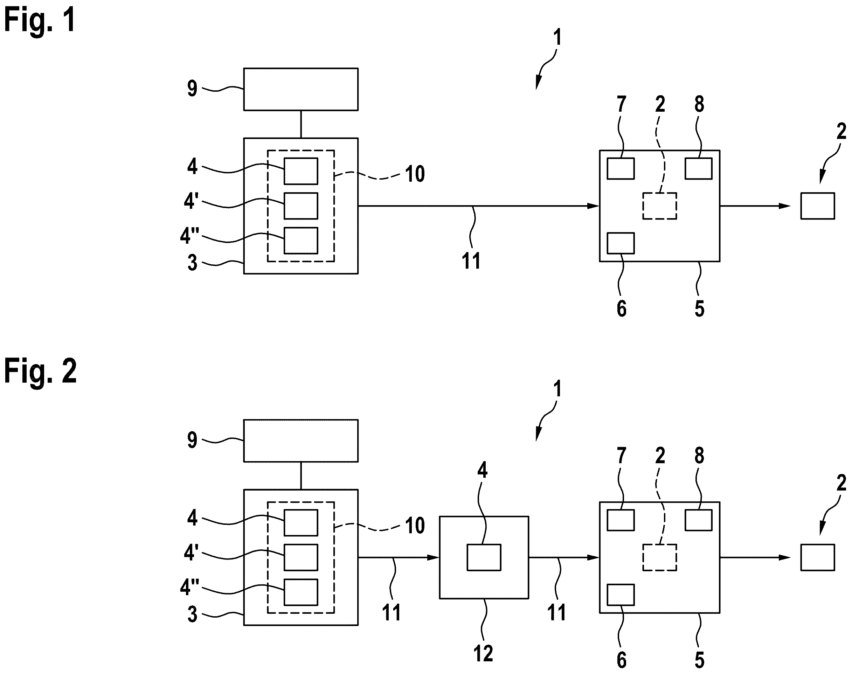

Fig. 1 zeigt eine Prinzipdarstellung eines Systems 1 zur additiven Fertigung wenigstens eines bestimmten Bauteils 2 definierter Bauteileigenschaften. Das System 1 umfasst eine einem Bereitsteller zuordenbare oder zugeordnete hardware- und/oder softwaremäßig implementierte Bereitstellungseinrichtung 3, welche zum Bereitstellen wenigstens eines zertifizierten Datensatzes 4, welcher von dem Bereitsteller für die additive Fertigung wenigstens eines bestimmten Bauteils 2 definierter Bauteileigenschaften zertifizierte anlagenspezifische Parameter und/oder bauteilspezifische Parameter und/oder prozessspezifische Parameter beinhaltet, eingerichtet ist, sowie eine einem Nutzer zuordenbare oder zugeordnete additive Fertigungseinrichtung 5, welche zum Anwenden eines additiven Fertigungsprozesses zur additiven Fertigung eines bestimmten Bauteils definierter Bauteileigenschaften auf Grundlage eines bereitgestellten zertifizierten Datensatzes 4 eingerichtet ist.

Das System 1 ist zur Durchführung eines Verfahrens zur additiven Fertigung eines Bauteils 2 definierter Bauteileigenschaften eingerichtet, welches Verfahren im Folgenden näher erläutert wird.

Mit dem System 1 sowie mit dem mit dem System 1 implementierbaren Verfahren lassen sich grundsätzlich die unterschiedlichsten Bauteile 2 bzw. Bauteilgruppen additiv fertigen. Insbesondere lassen sich technische Bauteile bzw. Bauteilgruppen additiv fertigen. In diesem Zusammenhang können sowohl neu konstruierte technische Bauteile 2 bzw. Bauteilgruppen als auch Ersatz- oder Nachrüstbauteile bzw. Ersatz- oder Nachrüstbauteilgruppen einer bestimmten technischen Einrichtung, wie z. B. einer Maschine, additiv gefertigt werden. Beispiele für technische Gebiete, in welchen sich verfahrensgemäß gefertigte Bauteile 2 bzw. Bauteilgruppen und somit auch das Verfahren einsetzen lassen, sind das Gebiet der Automatisierung, Robotik, Handling, Verpackung, etc. Mithin lassen sich verfahrensgemäß z. B. Bauteile bzw. Bauteilgruppen für Automatisierungs-, Robotik-, Handlings- und Verpackungseinrichtungen additiv fertigen. Konkret kann es sich bei solchen Bauteilen 2 bzw. Bauteilgruppen z. B. um Handhabungselemente, wie z. B. Greifelemente, Saugelemente, etc., handeln. Jeweilige Bauteile 2 bzw. Bauteilgruppen können mit wenigstens einer, z. B. durch innere Strukturen, wie z. B. von einem Temperiermedium durchströmbaren Temperierkanalstrukturen, von einem Strömungsmedium durchströmbaren Strömungskanalstrukturen, etc., gebildeten, zusätzlichen Funktionalität gefertigt werden.

Das Verfahren umfasst die im Folgenden näher beschriebenen Schritte:
In einem ersten Schritt des Verfahrens erfolgt vermittels der Bereitstellungseinrichtung 3 ein Bereitstellen eines zertifizierten Datensatzes 4, welcher von einem Bereitsteller für einen additiven Fertigungsprozess wenigstens eines bestimmten Bauteils 2 definierter Bauteileigenschaften zertifizierte anlagenspezifische Parameter und/oder bauteilspezifische Parameter und/oder prozessspezifische Parameter beinhaltet. In dem ersten Schritt des Verfahrens wird vermittels der Bereitstellungseinrichtung 3 sonach wenigstens ein zertifizierter Datensatz 4 bereitgestellt, welcher zertifizierte anlagenspezifische Parameter und/oder bauteilspezifische Parameter und/oder prozessspezifische Parameter für einen additiven Fertigungsprozess wenigstens eines Bauteils 2 definierter Bauteileigenschaften beinhaltet. Der erste Schritt wird typischerweise von einem Bereitsteller durchgeführt.

Der zertifizierte Datensatz 4 beinhaltet typischerweise sämtliche erforderlichen anlagenspezifischen Parameter und/oder bauteilspezifischen Parameter und/oder prozessspezifischen Parameter, welche für die additive Fertigung eines bestimmten Bauteils 2 definierter Bauteileigenschaften erforderlich sind. Mit anderen Worten liegen in dem zertifizierten Datensatz 4 sämtliche anlagenspezifischen und/oder bauteilspezifischen und/oder prozessspezifischen Informationen zur additiven Fertigung eines jeweiligen bestimmten Bauteils 2 definierter Bauteileigenschaften, d. h. insbesondere auch maschinenlesbare Steuerinformationen zur Steuerung bzw. Regelung des Betriebs der zur Durchführung eines additiven Fertigungsprozesses zur additiven Fertigung des jeweiligen Bauteils 2 definierter Bauteileigenschaften verwendeten additiven Fertigungseinrichtung 5, vor.

Mithin kann für jedwedes verfahrensgemäß zu fertigende bzw. gefertigte Bauteil 2 ein eigener zertifizierter Datensatz 4 bereitgestellt werden. Dies insbesondere deshalb, als zur Realisierung bestimmter Bauteileigenschaften bestimmte anlagenspezifische Parameter und/oder bauteilspezifische Parameter und/oder prozessspezifische Parameter erforderlich sind, mithin bestimmte Bauteileigenschaften mit bestimmten anlagenspezifischen Parametern und/oder bauteilspezifischen Parametern und/oder prozessspezifischen Parametern korreliert sein können, sodass nur eine bestimmte Kombination von anlagenspezifischen Parametern und/oder bauteilspezifischen Parametern und/oder prozessspezifischen Parametern eine zuverlässige und reproduzierbare additive Fertigung eines Bauteils 2 definierter Bauteileigenschaften ermöglicht. Hieraus ergibt sich, dass der zertifizierte Datensatz 4 typischerweise eine bestimmte Kombination von anlagenspezifischen Parametern und/oder bauteilspezifischen Parametern und/oder prozessspezifischen Parametern zur Herstellung eines bestimmten Bauteils 2 definierter Bauteileigenschaften beinhaltet.

Eine in dem zertifizierten Datensatz 4 enthaltene bestimmte Kombination entsprechender Parameter bezieht sich dabei typischerweise auf einen mit einer bestimmten additiven Fertigungseinrichtung 5 durchführbaren bestimmten additiven Fertigungsprozess eines bestimmten Bauteils 2 definierter Bauteileigenschaften. Der zertifizierte Datensatz 4 beinhaltet demnach typischerweise eine für einen bestimmten, mit einer bestimmten additiven Fertigungseinrichtung 5 durchführbaren additiven Fertigungsprozess maßgeschneiderte Kombination an anlagenspezifischen Parametern und/oder bauteilspezifischen Parametern und/oder prozessspezifischen Parametern, welche Kombination eine zuverlässige und reproduzierbare additive Fertigung eines Bauteils 2 definierter Bauteileigenschaften ermöglicht. Mithin können sich zertifizierte Datensätze 4 zur Fertigung von Bauteilen 2 derselben definierten Bauteileigenschaften dennoch in wenigstens einem anlagenspezifischen Parameter und/oder bauteilspezifischen Parameter und/oder prozessspezifischen Parameter unterscheiden, sofern diese unterschiedlichen additiven Fertigungsprozessen und/oder dem Betrieb unterschiedlicher additiver Fertigungseinrichtungen 5 zugrunde gelegt werden.

Im Rahmen der Durchführung des Verfahrens stellt ein Nutzer des Verfahrens, welcher eine additive Fertigung eines Bauteils 2 definierter Bauteileigenschaften vornehmen möchte, den ihm über die Bereitstellungseinrichtung 3 bereitgestellten zertifizierten Datensatz 4 der zur Durchführung eines additiven Fertigungsprozesses zur additiven Fertigung des jeweiligen Bauteils 2 definierter Bauteileigenschaften verwendeten additiven Fertigungseinrichtung 5 zur Verfügung, woraufhin der additive Fertigungsprozess zur Fertigung des jeweiligen Bauteils 2 definierter Bauteileigenschaften ohne nutzerseitigen Eingriff, insbesondere vollautomatisch, allein auf Grundlage des zertifizierten Datensatzes 4 durchgeführt werden kann. Das Anwenden wenigstens eines additiven Fertigungsprozesses zur additiven Fertigung wenigstens eines bestimmten Bauteils 2 definierter Bauteileigenschaften auf Grundlage des zertifizierten Datensatzes 4 vermittels der nutzerseitigen additiven Fertigungseinrichtung 5 kann sonach vollautomatisiert, insbesondere ohne einen nutzerseitigen Eingriff, erfolgen.

Der zertifizierte Datensatz 4 kann, wie bereits angedeutet, auch maschinenlesbare Steuerinformation zur, insbesondere vollautomatischen, Steuerung bzw. Regelung des Betriebs der additiven Fertigungseinrichtung 5 zur additiven Fertigung des additiv zu fertigenden Bauteils 2 auf Grundlage des zertifizierten Datensatzes 4 beinhalten. Bei entsprechenden Steuerinformationen kann es sich z. B. um einen jeweiligen Maschinencode (G-Code) der additiven Fertigungseinrichtung 5 handeln. Entsprechende Steuerinformationen können unmittelbar oder mittelbar durch entsprechende in dem zertifizierten Datensatz 4 enthaltene anlagenspezifische Parameter und/oder bauteilspezifische Parameter und/oder prozessspezifische Parameter beschrieben werden.

Zur additiven Fertigung des Bauteils 2 definierter Bauteileigenschaften benötigt ein Nutzer demnach nur eine additive Fertigungseinrichtung 5 und einen entsprechenden zertifizierten Datensatz 4, welcher der additiven Fertigungseinrichtung 5, d. h. typischerweise einer den Betrieb der additiven Fertigungseinrichtung steuernden bzw. regelnden hardware- und/oder softwaremäßig implementierten Steuereinrichtung 6, datenmäßig zur Verfügung wird.

Ein Nutzer des Verfahrens muss sonach keine Erarbeitung entsprechender Parameter vornehmen, welche ihm eine zuverlässige und reproduzierbare additive Fertigung eines jeweiligen Bauteils 2 definierter Bauteileigenschaften ermöglichen, da sämtliche Parameter bereits in dem dem additiven Fertigungsprozess zugrunde zulegenden zertifizierten Datensatz 4 enthalten sind. Ein Nutzer des Verfahrens benötigt ferner keine eigenen Erfahrungen oder Kenntnisse im Bereich der additiven Fertigung, da sämtliches "Wissen" über die nutzerseitig angestrebte additive Fertigung eines jeweiligen Bauteils 2 definierter Bauteileigenschaften in dem wenigstens einen zertifizierten Datensatz 4 enthalten ist.

Dem ersten Schritt kann vorausgehen, dass ein Bereitsteller entsprechende zertifizierte anlagenspezifische Parameter und/oder bauteilspezifische Parameter und/oder prozessspezifische Parameter für einen additiven Fertigungsprozess definiert und datenmäßig in einem entsprechenden zertifizierten Datensatz 4 zusammenfasst bzw. zusammengefasst hat. Mithin kann auch das Definieren entsprechender anlagenspezifischer Parameter und/oder bauteilspezifischer Parameter und/oder prozessspezifischer Parameter und das Zusammenfassen dieser in einem entsprechenden zertifizierten Datensatz 4 einen Schritt des Verfahrens darstellen.

In einem zweiten Schritt des Verfahrens erfolgt ein Anwenden eines additiven Fertigungsprozesses zur additiven Fertigung eines bestimmten Bauteils 2 definierter Bauteileigenschaften auf Grundlage des in dem ersten Schritt bereitgestellten zertifizierten Datensatzes 4.

In dem zweiten Schritt können grundsätzlich sämtliche additiven Fertigungsprozesse, d. h. insbesondere sämtliche pulver(bett)basierten additiven Fertigungsprozesse sowie sämtliche nicht pulver(bett)basierten additiven Fertigungsprozesse, angewendet werden. Ein in dem zweiten Schritt konkret angewendeter additiver Fertigungsprozess ist insbesondere durch die in dem jeweilig eingesetzten zertifizierten Datensatz 4 enthaltenen anlagenspezifischen Parameter und/oder prozessspezifischen Parameter definiert.

In dem zweiten Schritt können, je nach konkret angewendetem additiven Fertigungsprozess, grundsätzlich verschiedene Baumaterialien, d. h. z. B. Metalle, Kunststoffe, etc., verarbeitet werden. Entsprechend kann in dem zweiten Schritt z. B. ein additiver Fertigungsprozess angewendet werden, in welchem ein auf Metall oder Kunststoff basierendes Baumaterial zur additiven Fertigung des Bauteils 2 verarbeitet bzw. verwendet wird. Insbesondere kann in dem zweiten Schritt ein Fused-Deposition-Modelling ("FDM")-Prozess angewendet werden, in welchem ein auf Kunststoff basierendes Baumaterial zur additiven Fertigung des Bauteils 2 verwendet wird. FDM-Prozesse zeichnen sich durch eine vergleichsweise hohe Baurate bei gleichzeitig sehr guten Bauteileigenschaften aus. Das Verfahren lässt sich jedoch auch mit anderen additiven Fertigungsprozessen, wie z. B. Binder-Jetting-Prozessen, Digital-Light-Synthesis-Prozessen, CLIP-Prozessen, SLM-Prozessen, SLS-Prozessen, SEBM-Prozessen, Stereolithographie-Prozessen, etc., realisieren.

Das Verfahren kann auch das Bereitstellen eines zertifizierten Datensatzes 4', welcher von einem Bereitsteller für die Vorbereitung eines additiven Fertigungsprozesses des oder wenigstens eines bestimmten Bauteils 2 definierter Bauteileigenschaften zertifizierte anlagenspezifische Parameter und/oder bauteilspezifische Parameter und/oder prozessspezifische Parameter beinhaltet, sowie das Anwenden wenigstens einer Maßnahme zur Vorbereitung des oder wenigstens eines additiven Fertigungsprozesses zur additiven Fertigung eines bestimmten Bauteils 2 definierter Bauteileigenschaften auf Grundlage des zertifizierten Datensatzes 4' beinhaltet, umfassen. Ein Nutzer benötigt sonach (auch) keine eigenen Kenntnisse über eine entsprechende vorbereitende Maßnahme, als sämtliches hierzu erforderliches "Wissen" in dem zertifizierten Datensatz 4' enthalten sein kann.

Die wenigstens eine Maßnahme zur Vorbereitung des auf Grundlage des wenigstens einen zertifizierten Datensatzes 4' angewendeten additiven Fertigungsprozesses kann z. B. eine Maßnahme zur Vorbereitung eines im Rahmen des zur additiven Fertigung eines Bauteils 2 bestimmter Bauteileigenschaften durchgeführten additiven Fertigungsprozesses zu verwendenden Baumaterials, insbesondere eine Temperierung, Trocknung, Inertisierung, etc. des Baumaterials, umfassen. Die Maßnahme ist typischerweise im Hinblick auf einen konkret anzuwendenden additiven Fertigungsprozess bzw. ein im Rahmen der Durchführung eines konkret anzuwendenden additiven Fertigungsprozesses konkret eingesetzten Baumaterials gewählt. Beispielsweise können z. B. pulver(bett)basierte additive Fertigungsprozesse andere vorbereitende Maßnahmen erfordern, als nicht pulver(bett)basierte additive Fertigungsprozesse.

Das Verfahren kann auch das Bereitstellen eines zertifizierten Datensatzes 4", welcher von einem Bereitsteller für die Nachbereitung des oder wenigstens eines additiven Fertigungsprozesses eines bestimmten Bauteils 2 definierter Bauteileigenschaften zertifizierte anlagenspezifische Parameter und/oder bauteilspezifische Parameter und/oder prozessspezifische Parameter beinhaltet, sowie das Anwenden wenigstens einer Maßnahme zur Nachbereitung des oder wenigstens eines additiven Fertigungsprozesses zur additiven Fertigung eines bestimmten Bauteils definierter Bauteileigenschaften auf Grundlage des zertifizierten Datensatzes 4", umfassen. Ein Nutzer benötigt sonach (auch) keine eigenen Kenntnisse über eine entsprechende nachbereitende Maßnahme, als sämtliches hierzu erforderliches "Wissen" in dem zertifizierten Datensatz 4" enthalten sein kann.

Die wenigstens eine Maßnahme zur Nachbereitung des additiven Fertigungsprozesses kann eine Maßnahme zur Nachbearbeitung des im Rahmen des auf Grundlage des wenigstens einen zertifizierten Datensatzes angewendeten additiven Fertigungsprozesses additiv gefertigten Bauteils 2, insbesondere eine mechanische und/oder thermische Nachbehandlung des additiv gefertigten Bauteils 2, wie z. B. eine zumindest abschnittsweise mechanische Oberflächenbearbeitung zur Erzeugung bestimmter Oberflächeneigenschaften, eine zumindest abschnittsweise thermische Behandlung zur Erzeugung bestimmter struktureller Eigenschaften, etc., umfassen. Die Maßnahme ist typischerweise im Hinblick auf einen konkret angewendeten additiven Fertigungsprozess bzw. ein im Rahmen der Durchführung eines konkret angewendeten additiven Fertigungsprozesses konkret eingesetzten Baumaterials gewählt. Beispielsweise können z. B. vermittels pulver(bett)basierten additiven Fertigungsprozessen gefertigte Bauteile 2 andere nachbereitende Maßnahmen erfordern, als nicht vermittels pulver(bett)basierten additiven Fertigungsprozessen gefertigte Bauteile 2. Gleichermaßen können z. B. aus Metall gefertigte Bauteile 2 andere nachbereitende Maßnahmen erfordern, als aus Kunststoff gefertigte Bauteile 2.

Es ist ebenso denkbar, dass ein zertifizierter Datensatz 4, 4', 4" sowohl von einem Bereitsteller für einen additiven Fertigungsprozess wenigstens eines bestimmten Bauteils definierter Bauteileigenschaften zertifizierte anlagenspezifische Parameter und/oder bauteilspezifische Parameter und/oder prozessspezifische Parameter als auch von einem Bereitsteller für die Vorbereitung und/oder Nachbereitung eines additiven Fertigungsprozesses des oder wenigstens eines bestimmten Bauteils definierter Bauteileigenschaften zertifizierte anlagenspezifische Parameter und/oder bauteilspezifische Parameter und/oder prozessspezifische Parameter beinhaltet.

Nachfolgend werden in nicht abschließender Aufzählung Beispiele für, insbesondere bereitstellerseitig, zertifizierbare bzw. zertifizierte bauteilspezifische Parameter gegeben, welche in einem zertifizierten Datensatz 4 enthalten sein können.

Der zertifizierte Datensatz 4 kann als bauteilspezifischen Parameter z. B. wenigstens einen geometrisch-konstruktiven Parameter des wenigstens einen additiv zu fertigenden Bauteils 2, insbesondere alle geometrisch-konstruktiven Parameter des wenigstens einen additiv zu fertigenden Bauteils 2, beinhalten. Der zertifizierte Datensatz 4 kann sonach einen oder mehrere, insbesondere sämtlichen, geometrisch-konstruktiven Parameter, d. h. z. B. Abmessungen, Form, Volumen, etc., des additiv zu fertigenden Bauteils 2 beinhalten. Die geometrisch-konstruktiven Eigenschaften des additiv zu fertigenden Bauteils 2 und die sich hieraus ergebende konstruktive wie auch funktionelle Gestaltung des additiv zu fertigenden Bauteils 2 können sonach durch den zertifizierten Datensatz 4, insbesondere vollständig, definiert sein bzw. werden.

Der zertifizierte Datensatz 4 kann als bauteilspezifischen Parameter alternativ oder ergänzend wenigstens einen chemischen Parameter des additiv zu fertigenden Bauteils 2, insbesondere alle chemischen Parameter des additiv zu fertigenden Bauteils 2, beinhalten. Der zertifizierte Datensatz 4 kann sonach einen oder mehrere, insbesondere sämtlichen, chemischen Parameter, d. h. z. B. chemische Alterung, insbesondere in bestimmten chemischen Umgebungen, chemische Reaktivität, insbesondere in bestimmten chemischen Umgebungen, chemische Verträglichkeit mit bestimmten Medien, chemische Zusammensetzung, etc., des additiv zu fertigenden Bauteils 2 beinhalten. Die chemischen Eigenschaften des additiv zu fertigenden Bauteils 2 können sonach durch den zertifizierten Datensatz 4, insbesondere vollständig, definiert sein bzw. werden.

Der zertifizierte Datensatz 4 kann als bauteilspezifischen Parameter alternativ oder ergänzend wenigstens einen physikalischen Parameter des additiv zu fertigenden Bauteils 4, insbesondere alle physikalischen Parameter des additiv zu fertigenden Bauteils 4, beinhalten. Der zertifizierte Datensatz 4 kann sonach einen oder mehrere, insbesondere sämtlichen, physikalischen Parameter, d. h. z. B. elektrische Parameter, wie z. B. elektrische Leitfähigkeit, mechanische Parameter, wie z. B. Festigkeit, Härte, Duktilität, etc., thermische Parameter, wie z. B. Wärmeleitfähigkeit, Wärmekapazität, etc., tribologische Parameter, wie z. B. Rauigkeit, sowie sonstige physikalischen Parameter, wie z. B. Dichte, Masse, etc., des additiv zu fertigenden Bauteils 2 beinhalten. Die physikalischen Eigenschaften des additiv zu fertigenden Bauteils 2 können sonach durch den zertifizierten Datensatz 4, insbesondere vollständig, definiert sein bzw. werden.

Nachfolgend werden in nicht abschließender Aufzählung Beispiele für, insbesondere bereitstellerseitig, zertifizierbare bzw. zertifizierte anlagenspezifische Parameter gegeben, welche in dem zertifizierten Datensatz 4 enthalten sein können.

Der zertifizierte Datensatz 4 kann als anlagenspezifischen Parameter z. B. wenigstens einen Abmessungsparameter, wie z. B. Länge, Breite, Form, etc., wenigstens eines Baufelds bzw. einer Bauebene einer zur additiven Fertigung des additiv zu fertigenden Bauteils 2 zu verwendenden oder verwendeten additiven Fertigungseinrichtung 5, insbesondere alle Abmessungsparameter wenigstens eines Baufelds einer zur additiven Fertigung des additiv zu fertigenden Bauteils 2 zu verwendenden oder verwendeten additiven Fertigungseinrichtung 5, beinhalten. Die Abmessungen wenigstens eines Baufelds bzw. einer Bauebene einer zur additiven Fertigung des additiv zu fertigenden Bauteils 2 zu verwendenden oder verwendeten additiven Fertigungseinrichtung 5 können sonach durch den zertifizierten Datensatz 4, insbesondere vollständig, definiert sein bzw. werden.

Der zertifizierte Datensatz 4 kann als anlagenspezifischen Parameter alternativ oder ergänzend wenigstens einen Abmessungsparameter, wie z. B. Länge, Breite, Höhe bzw. Tiefe, Raumform, wenigstens eines Bauvolumens einer zur additiven Fertigung des additiv zu fertigenden Bauteils 2 zu verwendenden oder verwendeten additiven Fertigungseinrichtung 5, insbesondere alle Abmessungsparameter wenigstens eines Bauvolumens einer zur additiven Fertigung des additiv zu fertigenden Bauteils 2 zu verwendenden oder verwendeten additiven Fertigungseinrichtung 5, beinhalten. Die Abmessungen wenigstens eines Bauvolumens einer zur additiven Fertigung des additiv zu fertigenden Bauteils 2 zu verwendenden oder verwendeten additiven Fertigungseinrichtung 5 können sonach durch den zertifizierten Datensatz 4, insbesondere vollständig, definiert sein bzw. werden.

Der zertifizierte Datensatz 4 kann als anlagenspezifischen Parameter alternativ oder ergänzend wenigstens einen Fertigungsparameter, wie z. B. einen die Baurate beeinflussenden Bauratenparameter, einen einen Materialvorschubvorgang eines in einem Baufeld bzw. Bauvolumen selektiv anzuordnenden, insbesondere strangartigen bzw. -förmigen, Baumaterials beeinflussenden Vorschubparameter, einen einen Aufbring- bzw. Beschichtungsvorgang eines in einem Baufeld aufzubringenden, insbesondere pulverartigen bzw. -förmigen, Baumaterials beeinflussenden Aufbring- bzw. Beschichtungsparameter, einen einen Belichtungs- bzw. Bestrahlungsvorgang eines in einem Baufeld aufgebrachten, zu belichtenden bzw. zu bestrahlenden Baumaterials vermittels wenigstens eines Energiestrahls - wie z. B. eines Elektronen- oder Laserstrahls -, insbesondere zum Zwecke der selektiven Verfestigung und/oder zum Zwecke der selektiven Temperierung des Baumaterials, beeinflussenden Belichtungs- bzw. Bestrahlungsparameter, d. h. z. B. Energiestrahlanzahl, Energiestrahlintensität bzw. -leistung, Energiestrahlfokusgröße, Energiestrahlfokusposition, etc., einer zur additiven Fertigung des additiv zu fertigenden Bauteils 2 zu verwendenden oder verwendeten additiven Fertigungseinrichtung 5, insbesondere alle Fertigungsparameter einer zur additiven Fertigung des additiv zu fertigenden Bauteils 2 zu verwendenden oder verwendeten additiven Fertigungseinrichtung 5, beinhalten. Die Fertigungsparameter einer zur additiven Fertigung des additiv zu fertigenden Bauteils 2 zu verwendenden oder verwendeten additiven Fertigungseinrichtung 5 können sonach durch den zertifizierten Datensatz 4, insbesondere vollständig, definiert sein bzw. werden.

Der zertifizierte Datensatz 4 kann als anlagenspezifischen Parameter alternativ oder ergänzend wenigstens einen Anlagentypparameter, insbesondere einen Baureihen-, Modell-, Typ- und/oder Herstellerparameter, einer zur additiven Fertigung des additiv zu fertigenden Bauteils 2 zu verwendenden oder verwendeten additiven Fertigungseinrichtung 5, insbesondere alle Anlagentypparameter einer zur additiven Fertigung des additiv zu fertigenden Bauteils 2 zu verwendenden oder verwendeten additiven Fertigungseinrichtung 5, beinhalten. Die Anlagentypparameter einer zur additiven Fertigung des additiv zu fertigenden Bauteils 2 zu verwendenden oder verwendeten additiven Fertigungseinrichtung 5 können sonach durch den zertifizierten Datensatz 4, insbesondere vollständig, definiert sein bzw. werden.

Nachfolgend werden in nicht abschließender Aufzählung Beispiele für, insbesondere bereitstellerseitig, zertifizierbare bzw. zertifizierte prozessspezifische Parameter gegeben, welche in dem zertifizierten Datensatz 4 enthalten sein können.

Der zertifizierte Datensatz 4 kann als prozessspezifischen Parameter wenigstens einen Baumaterialparameter, insbesondere die chemische und/oder physikalische Zusammensetzung eines Baumaterials, die Pulvergrößenverteilung und/oder Pulvermorphologie eines Baumaterialpulvers, sofern ein pulverartiges bzw. -förmiges Baumaterial eingesetzt wird, Abmessungen bzw. Querschnittsgeometrie eines Baumaterialstrangs, sofern ein strangartig bzw. -förmiges Baumaterial eingesetzt wird, die Viskosität eines flüssigen Baumaterials, sofern ein flüssiges Baumaterial eingesetzt wird, den Reinheitsgrad bzw. Rezyklierungsanteil eines Baumaterials, das Mischungsverhältnis eines Baumaterials, sofern ein mehrere unterschiedliche Baumaterialkomponenten umfassendes Baumaterial eingesetzt wird, etc., wenigstens eines Baumaterials, welches von wenigstens einer zur additiven Fertigung des additiv zu fertigenden Bauteils 2 zu verwendenden oder verwendeten additiven Fertigungseinrichtung 5 zur additiven Fertigung einsetzbar ist bzw. eingesetzt wird, insbesondere alle Baumaterialparameter wenigstens eines Baumaterials, welches von einer zur additiven Fertigung des additiv zu fertigenden Bauteils 2 zu verwendenden oder verwendeten additiven Fertigungseinrichtung 5 zur additiven Fertigung einsetzbar ist, beinhalten. Die Baumaterialparameter wenigstens eines zur additiven Fertigung des additiv zu fertigenden Bauteils 2 zu verwendenden oder verwendeten Baumaterials können sonach durch den zertifizierten Datensatz 4, insbesondere vollständig, definiert sein bzw. werden.

Der zertifizierte Datensatz 4 kann als prozessspezifischen Parameter alternativ oder ergänzend wenigstens einen chemischen Prozessparameter, insbesondere eine chemische Atmosphäre, wie z. B. eine inerte Atmosphäre, innerhalb wenigstens eines Bau- und/oder Prozessraums bzw. -volumens einer zur additiven Fertigung des additiv zu fertigenden Bauteils 2 zu verwendenden oder verwendeten additiven Fertigungseinrichtung 5, insbesondere alle chemischen Prozessparameter wenigstens eines Bau- und/oder Prozessraums bzw. -volumens einer zur additiven Fertigung des additiv zu fertigenden Bauteils 2 zu verwendenden oder verwendeten additiven Fertigungseinrichtung 5, beinhalten. Die chemischen Prozessparameter innerhalb wenigstens eines Bau- und/oder Prozessraums bzw. -volumens einer zur additiven Fertigung des additiv zu fertigenden Bauteils 2 zu verwendenden oder verwendeten additiven Fertigungseinrichtung 5 können sonach durch den zertifizierten Datensatz 4, insbesondere vollständig, definiert sein bzw. werden.

Der zertifizierte Datensatz 4 kann als prozessspezifischen Parameter alternativ oder ergänzend wenigstens einen physikalischen Prozessparameter, insbesondere Feuchtigkeit, Druck, Temperatur, etc., außerhalb und/oder innerhalb wenigstens eines Bau- und/oder Prozessraums bzw. -volumens einer zur additiven Fertigung des additiv zu fertigenden Bauteils 2 zu verwendenden oder verwendeten additiven Fertigungseinrichtung 5, insbesondere alle physikalischen Prozessparameter wenigstens eines Bau- und/oder Prozessraums einer zur additiven Fertigung des additiv zu fertigenden Bauteils 2 zu verwendenden oder verwendeten additiven Fertigungseinrichtung 5, beinhalten. Die physikalischen Prozessparameter außerhalb und/oder innerhalb wenigstens eines Bau- und/oder Prozessraums bzw. -volumens einer zur additiven Fertigung des additiv zu fertigenden Bauteils 2 zu verwendenden oder verwendeten additiven Fertigungseinrichtung 5 können sonach durch den zertifizierten Datensatz 4, insbesondere vollständig, definiert sein bzw. werden.

Der zertifizierte Datensatz 4 kann als prozessspezifischen Parameter alternativ oder ergänzend wenigstens einen klimatischen Prozessparameter, insbesondere Feuchtigkeit, Druck, Temperatur, außerhalb und/oder innerhalb wenigstens einer Umgebung einer zur additiven Fertigung des additiv zu fertigenden Bauteils 2 zu verwendenden oder verwendeten additiven Fertigungseinrichtung 5, insbesondere alle klimatischen Prozessparameter einer zur additiven Fertigung des additiv zu fertigenden Bauteils 2 zu verwendenden oder verwendeten additiven Fertigungseinrichtung 5, beinhalten. Die klimatischen Prozessparameter außerhalb und/oder innerhalb wenigstens einer Umgebung einer zur additiven Fertigung des additiv zu fertigenden Bauteils 2 zu verwendenden oder verwendeten additiven Fertigungseinrichtung 4 können sonach durch den zertifizierten Datensatz 4, insbesondere vollständig, definiert sein bzw. werden.

Der zertifizierte Datensatz 4 kann als prozessspezifischen Parameter alternativ oder ergänzend wenigstens einen eine Aufteilung des additiv zu fertigenden Bauteils 2 in einzelne, jeweils einen Querschnitt des additiv zu fertigenden Bauteils 2 beinhaltende Schichten beschreibenden Schichtparameter (Slice-Parameter), wie z. B. Schichtanzahl, Schichtdicke, Schichtfläche, etc., insbesondere alle eine Aufteilung des additiv zu fertigenden Bauteils 2 in einzelne, jeweils einen Querschnitt des additiv zu fertigenden Bauteils 2 beinhaltenden Schichten beschreibende Schichtparameter, beinhalten. Die Schichtparameter (Slice-Parameter) können sonach durch den zertifizierten Datensatz 4, insbesondere vollständig, definiert sein bzw. werden.

Der zertifizierte Datensatz 4 kann als prozessspezifischen Parameter alternativ oder ergänzend wenigstens einen Parameter, insbesondere einen geometrisch-konstruktiven Parameter und/oder einen Anordnungs- und/oder Ausrichtungsparameter relativ zu einem zu stützenden additiv zu fertigenden oder gefertigten Bauteil 2, wenigstens eines zur Unterstützung des additiv zu fertigenden oder gefertigten Bauteils 2 dienenden Stützelements (Supportelements), insbesondere alle Parameter wenigstens eines zur Unterstützung des additiv zu fertigenden oder gefertigten Bauteils 2 dienenden Stützelements, beinhalten. Die Parameter wenigstens eines zur Unterstützung des additiv zu fertigenden oder gefertigten Bauteils 2 dienenden Stützelements (Supportelements) können sonach durch den zertifizierten Datensatz 4, insbesondere vollständig, definiert sein bzw. werden.

Der zertifizierte Datensatz 4 kann als prozessspezifischen Parameter alternativ oder ergänzend wenigstens einen eine Baustrategie, d. h. insbesondere eine Baumaterialaufbringstrategie, eine Belichtungs- oder Bestrahlungsstrategie, etc., des additiv zu fertigenden Bauteils 2 beschreibenden Baustrategieparameter, insbesondere alle eine Baustrategie des additiv zu fertigenden Bauteils 2 beschreibenden Baustrategieparameter, beinhalten. Die Baustrategieparameter des additiv zu fertigenden Bauteils 2 beschreibenden Baustrategieparameter können sonach durch den zertifizierten Datensatz 4, insbesondere vollständig, definiert sein bzw. werden.

Der zertifizierte Datensatz 4 kann, wie erwähnt, wenigstens einen, insbesondere alle, geometrisch-konstruktiven Parameter wenigstens eines zur Unterstützung des additiv zu fertigenden oder gefertigten Bauteils 2 dienenden Stützelements (Supportelements) als prozessspezifischen Parameter beinhalten. Dabei kann das wenigstens eine Stützelement mit wenigstens einem ein Entfernen des wenigstens einen Stützelements von dem additiv gefertigten Bauteil 2 erleichternden Strukturelement, insbesondere einer, z. B. durch eine Sollbruchstelle realisierten, Schwächung des wenigstens einen Stützelements, und/oder mit einer das zu entfernende Stützelement, z. B. farblich, von dem additiv gefertigten Bauteil 2 abhebenden, optisch hervorhebenden Kennzeichnung, versehen sein bzw. werden. In dem zertifizierten Datensatz 4 können sonach im Zusammenhang mit entsprechenden auszubildenden Strukturelementen auch Informationen enthalten sein, welche die spätere Handhabung, d. h. insbesondere die Entfernung von Stützelementen, eines auf Grundlage des zertifizierten Datensatzes 4 additiv gefertigten Bauteils 2 betreffen, als diese das, insbesondere additive, Ausbilden entsprechender Strukturelemente beinhalten.

In einem Ausführungsbeispiel kann ein Vergleichen wenigstens eines im Rahmen der additiven Fertigung des additiv zu fertigenden Bauteils 2 definierter Bauteileigenschaften vermittels einer, z. B. optischen, Erfassungseinrichtung 7 erfassten, die additive Fertigung des additiv zu fertigenden Bauteils 2 betreffenden Parameters P mit wenigstens einem, insbesondere korrespondierenden, Referenzparameter RP, bei welchem es sich insbesondere um einen durch den zertifizierten Datensatz 4 beschriebenen anlagenspezifischen Parameter und/oder bauteilspezifischen Parameter und/oder prozessspezifischen Parameter handelt, erfolgen. Mithin kann ein aktuell durchgeführter additiver Fertigungsprozess, insbesondere in Echtzeit, gegen einen durch den zertifizierten Datensatz 4 beschriebenen additiven Fertigungsprozess geprüft werden. Derart kann eine Überwachung eines auf Grundlage des zertifizierten Datensatzes 4 erfolgenden additiven Fertigungsprozesses realisiert werden.

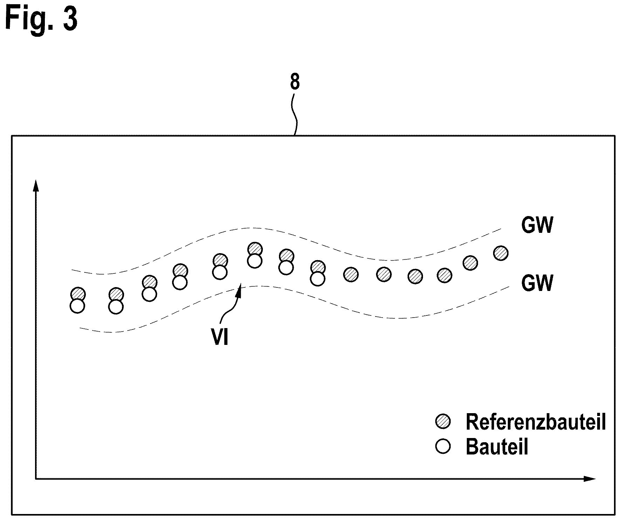

In diesem Ausführungsbeispiel kann ferner ein Auswerten der Vergleichsinformation VI im Hinblick auf wenigstens ein Auswertekriterium, insbesondere dahin, ob dieses eine Über- oder Unterschreitung wenigstens eines parameterspezifischen Grenzwerts oder Grenzwertbereichs anzeigt, und ein Erzeugen einer das jeweilige Auswerteergebnis beschreibenden Auswerteinformation erfolgen. Die Auswerteinformation kann insbesondere angeben, ob bzw. inwieweit das additiv gefertigte Bauteil 2 wenigstens einem, insbesondere durch den wenigstens einen Grenzwert GW oder Grenzwertbereich definierten, Auswertekriterium genügt oder nicht genügt. Das Ausgeben kann, wie Fig. 3 beispielhaft zeigt, über ein Ausgaben einer entsprechenden Auswerteinformation an einer, insbesondere akustischen und/oder optischen und/oder haptischen, Ausgabeeinrichtung 8, d. h. z. B. einem Display, und/oder über ein datenmäßiges Übertragen einer entsprechenden Auswerteinformation an wenigstens einen Kommunikationspartner erfolgen.

In einem Ausführungsbeispiel kann der zertifizierte Datensatz 4 bereitstellerseitig erzeugt werden bzw. worden sein. Dabei kann der zertifizierte Datensatz 4 seitens des Bereitstellers z. B. auf Grundlage von Informationen des Bereitstellers, insbesondere auf Grundlage von seitens des Bereitstellers, bevorzugt unter definierten Fertigungsbedingungen, gegebenenfalls empirisch bzw. iterativ gewonnenen, Fertigungsergebnissen eines dem additiv zu fertigenden Bauteil 2 entsprechenden Referenzbauteils, erzeugt werden oder worden sein. Der zertifizierte Datensatz 4 kann sonach auf der additiven Fertigung eines Referenzbauteils mit definierten Bauteileigenschaften, welche (exakt) den Bauteileigenschaften eines verfahrensgemäß zu fertigenden Bauteils 2 entsprechen, basieren. Mithin können diejenigen anlagenspezifischen Parameter und/oder bauteilspezifischen Parameter und/oder prozessspezifischen Parameter, auf Grundlage welcher ein bestimmtes Referenzbauteil definierter Bauteileigenschaften zuverlässig und reproduzierbar gefertigt wurde, d. h. insbesondere alle anlagenspezifischen Parameter und/oder bauteilspezifischen Parameter und/oder prozessspezifischen Parameter, auf Grundlage welcher ein bestimmtes Referenzbauteil definierter Bauteileigenschaften zuverlässig und reproduzierbar gefertigt wurde, als zertifizierter Datensatz 4 für die additive Fertigung eines dem Referenzbauteil (exakt) entsprechenden additiv zu fertigenden Bauteils 2 verwendet werden bzw. in dem wenigstens einen zertifizierten Datensatz 4 enthalten sein. Mit anderen Worten können die in dem zertifizierten Datensatz 4 enthaltenen anlagenspezifischen Parameter und/oder bauteilspezifischen Parameter und/oder prozessspezifischen Parameter als im Rahmen der additiven Fertigung eines bestimmten Referenzbauteils definierter Bauteileigenschaften unter bestimmten - typischerweise ebenso durch den zertifizierten Datensatz 4 abgebildeten - anlagenspezifischen und/oder bauteilspezifischen und/oder prozessspezifischen Gegebenheiten erprobte Parameter erachtet werden. Hieraus ergibt sich der bereits erwähnte Aspekt, dass ein Nutzer des Verfahrens keine eigene Erarbeitung entsprechender Parameter vornehmen muss, welche ihm eine zuverlässige und reproduzierbare additive Fertigung eines jeweiligen Bauteils 2 definierter Bauteileigenschaften ermöglichen, da sämtliche Parameter bereits in dem dem additiven Fertigungsprozess zugrunde zulegenden zertifizierten Datensatz 4 enthalten sind.

**In** einem weiteren Ausführungsbeispiel kann der zertifizierte Datensatz 4 jedoch ursprünglich auch durch einen Nutzer bzw. einen Dritten - hierbei handelt es sich um eine natürliche oder juristische Person, welche als externer Dienstleister entsprechende Datensätze bereitstellt, ohne eigens additive Bauteile 2 fertigen zu wollen - erzeugt werden bzw. worden sein. Es ist demnach denkbar, dass der zertifizierte Datensatz 4 seitens des Nutzers bzw. des Dritten auf Grundlage von Informationen des Nutzers bzw. des Dritten, insbesondere auf Grundlage seitens des Nutzers bzw. des Dritten, bevorzugt unter definierten Fertigungsbedingungen, gegebenenfalls empirisch bzw. iterativ gewonnenen, Fertigungsergebnissen eines dem additiv zu fertigenden Bauteil 2 (exakt) entsprechenden Referenzbauteils, erzeugt wird oder wurde.

**In** diesem Ausführungsbeispiel werden die seitens des Nutzers bzw. des Dritten als (potentieller) zertifizierter Datensatz bereitgestellten Informationen durch den Bereitsteller jedoch im Hinblick auf wenigstens ein bereitstellerseitig vorgebbares oder vorgegebenes Autorisierungskriterium, d. h. z. B. ein Sicherheitskriterium, Qualitätskriterium, etc., geprüft und nur bei positiver Autorisierung durch den Bereitsteller als zertifizierter Datensatz autorisiert. Hierzu kann eine hardware- und/oder softwaremäßig implementierte Autorisierungseinrichtung 9 verwendet werden.

**In** einem Ausführungsbeispiel kann das Prüfen kann ein Vergleichen wenigstens eines in dem zu autorisierenden Datensatz enthaltenen anlagenspezifischen Parameters und/oder bauteilspezifischen Parameters und/oder prozessspezifischen Parameters mit wenigstens einem, insbesondere jeweilig korrespondierenden, anlagenspezifischen und/oder bauteilspezifischen und/oder prozessspezifischen Referenzparameter sowie ein Erzeugen einer das jeweilige Vergleichsergebnis beschreibenden Vergleichsinformation umfassen.

**In** einem Ausführungsbeispiel kann das Autorisieren weiterhin ein Auswerten der Vergleichsinformation im Hinblick auf wenigstens ein Auswertekriterium, insbesondere dahin, ob dieses eine Über- oder Unterschreitung wenigstens eines parameterspezifischen Grenzwerts oder Grenzwertbereichs anzeigt, umfassen. Beispielsweise kann ein bauteilspezifischer Grenzwert bzw. Grenzwertbereich bestimmte geometrisch-konstruktive, chemische und/oder physikalische Eigenschaften betreffen, wobei ein Autorisieren nur bei deren Einhaltung erfolgt. Durch einen entsprechenden Grenzwert bzw. Grenzwertbereich kann ein zu erfüllendes Sicherheits- bzw. Qualitätskriterium definiert werden.

**In** einem Ausführungsbeispiel kann das Autorisieren im Weiteren ein Ausgeben wenigstens einer das Auswerte- bzw. Autorisierungsergebnis beschreibenden Auswerte- bzw. Autorisierungsinformation umfassen. Das Ausgeben einer entsprechenden Auswerte- bzw. Autorisierungsinformation kann über eine, insbesondere akustische und/oder optische und/oder haptische, Ausgabeeinrichtung 8, d. h. z. B. einem Display, und/oder über ein datenmäßiges Übertragen einer entsprechenden Auswerte- bzw. Autorisierungsinformation an wenigstens einen Kommunikationspartner erfolgen.

In einem weiteren Ausführungsbeispiel kann der zertifizierte Datensatz 4 eine bestimmte Anzahl, insbesondere eine Maximalanzahl, an auf Grundlage des zertifizierten Datensatzes 4 vermittels einer bestimmten additiven Fertigungsvorrichtung 5 möglichen additiven Fertigungsvorgängen beinhalten. In dem zertifizierten Datensatz 4 kann sonach bestimmt sein, wie viele additiv zu fertigende Bauteile 2 auf Grundlage des zertifizierten Datensatzes 4 maximal additiv gefertigt werden können. Der zertifizierte Datensatz 4 kann hardware- und/oder softwaretechnisch demnach so konfiguriert sein, dass mit diesem nur eine bestimmte Anzahl an Bauteilen 2 definierter Bauteileigenschaften gefertigt werden können. Derart verfügt der Bereitsteller über eine Kontrollmöglichkeit im Zusammenhang mit der Nutzung des zertifizierten Datensatzes 4, was ebenso eine probate Maßnahme gegen eine unautorisierte Verwendung des zertifizierten Datensatzes 4 darstellen kann.

In einem weiteren Ausführungsbeispiel kann der zertifizierte Datensatz 4, insbesondere die darin enthaltenen anlagenspezifischen Parameter und/oder bauteilspezifischen Parameter und/oder prozessspezifischen Parameter, von einem Nutzer nicht veränderbar sein. Der zertifizierte Datensatz 4 kann hardware- und/oder softwaretechnisch demnach so konfiguriert sein, d. h. insbesondere vor nutzerseitigen Veränderungen geschützt sein, dass ein Nutzer keine Änderungen an dem zertifizierten Datensatz 4 vornehmen kann. Dies kann z. B. über einen Schreibschutz der in dem zertifizierten Datensatz 4 enthaltenen Parameter realisiert sein. Der zertifizierte Datensatz 4 kann derart vor ungewünschten Manipulationen geschützt werden.

In einem weiteren Ausführungsbeispiel kann der zertifizierte Datensatz 4 verschlüsselt sein bzw. werden. Der zertifizierte Datensatz 4 kann hardware- und/oder softwaretechnisch demnach so konfiguriert sein, dass ein Schlüssel erforderlich ist, um diesen zu nutzen. Ein Nutzer kann den zertifizierten Datensatz 4 sonach nur nutzen, wenn er über einen entsprechenden Schlüssel zum Entschlüsseln verfügt. Ein entsprechender Schlüssel kann durch den Bereitsteller an einen Nutzer bereitgestellt werden. Die Bereitstellung eines entsprechenden Schlüssels kann mit dem Vorliegen einer einen erfolgreichen Bezahlvorgang eines Nutzers beschreibenden Bezahlinformation verknüpft sein.

In einem weiteren Ausführungsbeispiel kann der zertifizierte Datensatz 4 durch den Bereitsteller auf einem mit wenigstens einem durch den Pfeil 11 lediglich schematisch angedeuteten Kommunikationsnetzwerk verbindbaren oder verbundenen Datenspeicher 10, insbesondere einem Server, gegebenenfalls einem Cloud-Server, bereitgestellt werden, von welchem er von einem Nutzer abgerufen werden kann oder wird. Ein entsprechender Datenspeicher 10 kann dem Bereitsteller zugeordnet sein; ein entsprechender Datenspeicher 10 kann sonach im Bereich einer bereitstellerseitig verwalteten Daten- bzw. Kommunikationsinfrastruktur vorhanden sein. Bei dem Kommunikationsnetzwerk 11 kann es sich um ein globales oder um ein lokales Kommunikationsnetzwerk, mithin z. B. um das Internet oder um ein Intranet, handeln. Durch das Bereitstellen des zertifizierten Datensatzes 4 auf einem entsprechenden Datenspeicher 10 kann einem Nutzer grundsätzlich unabhängig von Ort und Zeit ein Abruf ermöglicht werden. Jedwede zwischen dem Datenspeicher 10 und dem Nutzer hergestellte Kommunikationsverbindung kann verschlüsselt sein.

In einem weiteren Ausführungsbeispiel kann das Abrufen des zertifizierten Datensatzes 4 von dem wenigstens einen Datenspeicher 10 über eine, gegebenenfalls nutzerindividuell konfigurierbare bzw. konfigurierte, datenspeicherseitige Benutzeroberfläche bzw. -schnittstelle erfolgen. Der Zugang zu einer entsprechenden Benutzeroberfläche bzw. -schnittstelle kann durch einen Loginvorgang eines Nutzers erfolgen. Sämtliche nutzerseitigen Interaktionen mit dem Datenspeicher 10 können z. B. über in nutzerseitigen (portablen) Endgeräten, wie z. B. Computer, Laptop, Smartphone, Tablet-PC, Smartwatch, Smartbrille, etc., implementierten web-basierte Anwendungen, wie z. B. bestimmte Software (Apps), Browser, etc., erfolgen.

In einem weiteren Ausführungsbeispiel kann der zertifizierte Datensatz 4 von einem Nutzer (nur) abgerufen werden, sofern, insbesondere datenspeicherseitig, eine einen (erfolgreichen) Bezahlvorgang des Nutzers beschreibende Bezahlinformation vorliegt. Ein Bezahlvorgang kann ein Bezahlvorgang für einen einmaligen Zugriff auf den Datenspeicher 10 zum Abruf wenigstens eines bestimmten zertifizierten Datensatzes 4 sein. Ein Bezahlvorgang kann jedoch - im Sinne eines Abonnements - auch ein Bezahlvorgang für einen mehrmaligen Zugriff auf den Datenspeicher 10 zum Abruf wenigstens eines bestimmten zertifizierten Datensatzes 4 innerhalb eines bestimmten Zeitraums, d. h. z. B. wenigstens einer Stunde, wenigstens eines Tags, wenigstens eines Monats, wenigstens eines Jahrs, etc., sein.

Ein Bezahlvorgang kann prinzipiell auf jedwede Weise vorgenommen werden. Der Nutzer kann Bezahlvorgänge z. B. konventionell durch Überweisen eines bestimmten Geldbetrags auf ein Geldkonto des Bereitstellers oder über geeignete Bezahldienste an einen virtuellen Zahlungsempfänger, d. h. z. B. über ein Internet-Zahlungsportal, vornehmen. Es ist auch denkbar, dass ein entsprechender Bezahldienst z. B., gegebenenfalls als eigenes Nutzersubmenü, in eine datenspeicherseitige Benutzeroberfläche bzw. -schnittstelle integriert ist. Ein entsprechender Bezahldienst kann alternativ oder ergänzend z. B. auch als Software ("App") für ein benutzerseitiges (portables) Endgerät, z. B. Computer, Laptop, Smartphone, Tablet-PC, Smartwatch, Smartbrille, etc., implementiert sein.

In einem weiteren Ausführungsbeispiel kann der zertifizierte Datensatz 4 auf ein nutzerseitiges Zugriffsportal 12 abgerufen bzw. auf einem solchen abgespeichert werden, von welchem er wiederum auf eine nutzerseitige additive Fertigungseinrichtung 5 abrufbar ist. Mithin kann sich ein Nutzer - insoweit unabhängig von dem Bereitsteller - in einer eigenen nutzerseitig verwalteten Daten- bzw. Kommunikationsinfrastruktur ein Zugriffsportal 12 einrichten, von welchem zertifizierte Datensätze 4 auf wenigstens eine nutzerseitige additive Fertigungseinrichtung 5 abgerufen werden können. Über das nutzerseitige Zugriffsportal 12 können sonach (nur) solche zertifizierten Datensätze 4 bereitgestellt und abgerufen werden, welche für den jeweiligen Nutzer, z. B. aufgrund eines bestimmten Bauteilprogramms in technischen Einrichtungen des Nutzers, relevant sind. Beispielsweise können über ein Zugriffsportal 12 eines Nutzers aus dem Bereich der Verpackungstechnik nur solche zertifizierten Datensätze bereitgestellt und abgerufen werden, welche in den Verpackungsmaschinen des Nutzers tatsächlich verbaute Bauteile 2 betreffen. Ein entsprechendes Zugriffsportal 12 kann als, gegebenenfalls web-basierte, Plug-In-Lösung für eine nutzerseitig verwaltete Daten- bzw. Kommunikationsinfrastruktur vorliegen, sodass eine nutzerseitig verwaltete verwalteten Daten- bzw. Kommunikationsinfrastruktur auf einfache Weise um ein entsprechendes Zugriffsportal 12 erweitert werden kann.

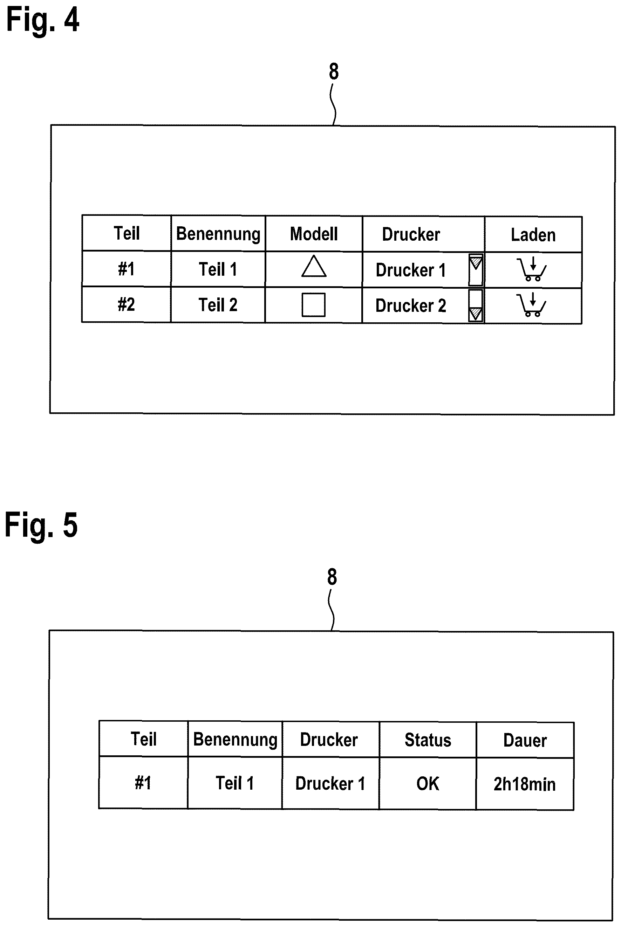

Ein Ausführungsbeispiel einer beispielhaften Benutzeroberfläche eines entsprechenden Zugriffsportals 12 ist in Fig. 4 dargestellt. Insbesondere ist dabei eine mögliche tabellenartige Darstellung der additiv fertigbaren Bauteile 2 (erste Spalte von links), der zugehörigen Bauteilbezeichnungen (zweite Spalte von links), der zugehörigen Modelle (dritte Spalte von links), der verfüggaren additiven Fertigungseinrichtungen 5 ("Drucker") (vierte Spalte von links) sowie die Möglichkeit des Herunterladens der jeweiligen zertifizierten Datensätze 4 auf eine jeweilige additive Fertigungseinrichtung 5 (fünfte Spalte von links) beispielhaft dargestellt. Im Zusammenhang mit der die Auswahl einer additiven Fertigungseinrichtung 5 betreffenden Spalte ist exemplarisch zu ergänzen, dass Drop-Down-Menüs implementiert werden können, über welche ein Nutzer eine Auswahl - hier einer additiven Fertigungseinrichtung 5 - vornehmen kann.

In einem weiteren Ausführungsbeispiel kann der auf einem nutzerseitigen Zugriffsportal 12 abgespeicherte zertifizierte Datensatz 4, auf additive Fertigungseinrichtung 5 eines Kunden des Nutzers abrufbar sein. Dies kann wiederum an das Vorliegen einer einen Bezahlvorgang eines Kunden des Nutzers an den Nutzer und/oder Bereitsteller beschreibenden Bezahlinformation geknüpft sein bzw. werden.

In einem weiteren Ausführungsbeispiel kann der zertifizierte Datensatz 4 und/oder ein nutzerseitiges Zugriffsportal 12, insbesondere als, gegebenenfalls web-basierte, Plug-In-Lösung, auf einem portablen, an einen Nutzer aushändigbaren oder ausgehändigten, insbesondere kommunikations- bzw. netzwerkfähigen, Datenträger, wie z. B. einem USB-Stick, CD-ROM, Speicherkarte, etc., bereitgestellt werden, von welchem er von einem Nutzer abgerufen wird oder werden kann.

Ein entsprechender kommunikations- bzw. netzwerkfähiger Datenträger kann eingerichtet sein, den additiven Fertigungsprozess betreffende Daten, d. h. z. B. Statusdaten, Fehlerdaten, etc. an einen Kommunikationspartner, d. h. z. B. den Bereitsteller, zu übertragen. Die Übertragung dieser Daten kann wiederum verschlüsselt erfolgen.

Ein entsprechender Datenträger kann an einen Nutzer ausgehändigt werden, sofern eine einen Bezahlvorgang des Nutzers beschreibende Bezahlinformation vorliegt. Die vorstehenden Ausführungen im Zusammenhang mit entsprechenden Bezahlinformationen und Bezahlvorgängen gelten analog.

In einem weiteren Ausführungsbeispiel kann im Rahmen des Anwendens des wenigstens einen additiven Fertigungsprozesses zur additiven Fertigung des Bauteils 2 definierter Bauteileigenschaften auf Grundlage des zertifizierten Datensatzes 4 auf einer, insbesondere bereitstellerseitigen und/oder nutzerseitigen, Ausgabeeinrichtung 8 wenigstens eine den Status des jeweiligen additiven Fertigungsprozesses betreffende Statusanzeige erzeugt und ausgegeben werden. Eine entsprechende Statusanzeige ermöglicht, gegebenenfalls in Echtzeit, eine Überwachung eines auf Grundlage des zertifizierten Datensatzes 4 durchgeführten additiven Fertigungsprozesses.

Ein Ausführungsbeispiel einer entsprechenden Statusanzeige ist in Fig. 5 beispielhaft dargestellt. Insbesondere ist dabei eine mögliche tabellenartige Darstellung des additiv zu fertigenden Bauteils 2 (erste Spalte von links), der zugehörigen Bauteilbezeichnung (zweite Spalte von links), die zugehörige Bezeichnung einer eingesetzten additiven Fertigungseinrichtung 5 (dritte Spalte von links), des zugehörigen Status (vierte Spalte von links) sowie die Restdauer des additiven Fertigungsprozesses (fünfte Spalte von links) beispielhaft dargestellt.

Einzelne, mehrere oder sämtliche im Zusammenhang mit einem bestimmten Ausführungsbeispiel beschriebenen Merkmale können mit einzelnen, mehreren oder sämtlichen Merkmale wenigstens eines anderen Ausführungsbeispiels beliebig kombiniert werden. Bestimmte Merkmale der Erfindung sind in den nachfolgenden Aspekten nochmals beispielhaft dargestellt:
1. Verfahren zur additiven Fertigung wenigstens eines Bauteils (2) definierter Bauteileigenschaften, umfassend:
   - Bereitstellen wenigstens eines zertifizierten Datensatzes (4), welcher von einem Bereitsteller für einen additiven Fertigungsprozess wenigstens eines bestimmten Bauteils (2) definierter Bauteileigenschaften zertifizierte bauteilspezifische Parameter und/oder anlagenspezifische Parameter und/oder prozessspezifische Parameter beinhaltet,
   - Anwenden wenigstens eines additiven Fertigungsprozesses zur additiven Fertigung wenigstens eines bestimmten Bauteils (2) definierter Bauteileigenschaften auf Grundlage des wenigstens einen zertifizierten Datensatzes (4).
2. Verfahren nach Aspekt 1, umfassend Bereitstellen des oder wenigstens eines zertifizierten Datensatzes (4'), welcher von einem Bereitsteller für die Vorbereitung eines additiven Fertigungsprozesses des oder wenigstens eines additiv zu fertigenden Bauteils (2) definierter Bauteileigenschaften zertifizierte anlagenspezifische Parameter und/oder bauteilspezifische Parameter und/oder prozessspezifische Parameter beinhaltet, Anwenden wenigstens einer Maßnahme zur Vorbereitung des oder wenigstens eines additiven Fertigungsprozesses zur additiven Fertigung des wenigstens einen additiv zu fertigenden Bauteils (2) definierter Bauteileigenschaften auf Grundlage des wenigstens einen zertifizierten Datensatzes (4').
3. Verfahren nach Aspekt 2, wobei die wenigstens eine Maßnahme zur Vorbereitung des additiven Fertigungsprozesses eine Maßnahme zur Vorbereitung eines im Rahmen des zur additiven Fertigung eines Bauteils (2) bestimmter Bauteileigenschaften durchgeführten additiven Fertigungsprozesses zu verwendenden Baumaterials eine Temperierung und/oder Trocknung und/oder Inertisierung des Baumaterials umfasst.
4. Verfahren nach einem der vorhergehenden Aspekte, umfassend Bereitstellen des oder wenigstens eines zertifizierten Datensatzes (4"), welcher von einem Bereitsteller für die Nachbereitung des oder wenigstens eines additiven Fertigungsprozesses wenigstens eines additiv gefertigten Bauteils (2) definierter Bauteileigenschaften zertifizierte anlagenspezifische Parameter und/oder bauteilspezifische Parameter und/oder prozessspezifische Parameter beinhaltet, Anwenden wenigstens einer Maßnahme zur Nachbereitung des oder wenigstens eines additiven Fertigungsprozesses zur additiven Fertigung des wenigstens einen additiv gefertigten Bauteils (2) definierter Bauteileigenschaften auf Grundlage des wenigstens einen zertifizierten Datensatzes (4").
5. Verfahren nach Aspekt 4, wobei die wenigstens eine Maßnahme zur Nachbereitung des additiven Fertigungsprozesses eine Maßnahme zur Nachbearbeitung des im Rahmen des additiven Fertigungsprozesses additiv gefertigten Bauteils (2) eine mechanische und/oder thermische Nachbehandlung des additiv gefertigten Bauteils (2) umfasst.
6. Verfahren nach einem der vorhergehenden Aspekte, wobei ein zertifizierter Datensatz bereitgestellt wird, welcher
   - wenigstens einen geometrisch-konstruktiven Parameter des wenigstens einen additiv zu fertigenden Bauteils (2), insbesondere alle geometrisch-konstruktiven Parameter des wenigstens einen additiv zu fertigenden Bauteils (2), als bauteilspezifischen Parameter beinhaltet, und/oder
   - wenigstens einen chemischen Parameter des wenigstens einen additiv zu fertigenden Bauteils (2), insbesondere alle chemischen Parameter des wenigstens einen additiv zu fertigenden Bauteils (2), als bauteilspezifischen Parameter beinhaltet, und/oder
   - wenigstens einen physikalischen Parameter des wenigstens einen additiv zu fertigenden Bauteils (2), insbesondere alle physikalischen Parameter des wenigstens einen additiv zu fertigenden Bauteils (2), als bauteilspezifischen Parameter beinhaltet.
7. Verfahren nach einem der vorhergehenden Aspekte, wobei ein zertifizierter Datensatz bereitgestellt wird, welcher
   - wenigstens einen Abmessungsparameter wenigstens eines Baufelds wenigstens einer zur additiven Fertigung des wenigstens einen additiv zu fertigenden Bauteils (2) zu verwendenden oder verwendeten additiven Fertigungseinrichtung (5), insbesondere alle Abmessungsparameter wenigstens eines Baufelds wenigstens einer zur additiven Fertigung des wenigstens einen additiv zu fertigenden Bauteils (2) zu verwendenden oder verwendeten additiven Fertigungseinrichtung (5), als anlagenspezifischen Parameter beinhaltet, und/oder
   - wenigstens einen Abmessungsparameter wenigstens eines Bauvolumens wenigstens einer zur additiven Fertigung des wenigstens einen additiv zu fertigenden Bauteils (2) zu verwendenden oder verwendeten additiven Fertigungseinrichtung (5), insbesondere alle Abmessungsparameter wenigstens eines Bauvolumens wenigstens einer zur additiven Fertigung des wenigstens einen additiv zu fertigenden Bauteils (2) zu verwendenden oder verwendeten additiven Fertigungseinrichtung (5), als anlagenspezifischen Parameter beinhaltet, und/oder
   - wenigstens einen Fertigungsparameter, insbesondere einen Bauratenparameter, wenigstens einer zur additiven Fertigung des wenigstens einen additiv zu fertigenden Bauteils (2) zu verwendenden oder verwendeten additiven Fertigungseinrichtung (5), insbesondere alle Fertigungsparameter wenigstens einer zur additiven Fertigung des wenigstens einen additiv zu fertigenden Bauteils (2) zu verwendenden oder verwendeten additiven Fertigungseinrichtung (5), als anlagenspezifischen Parameter beinhaltet,
   - wenigstens einen Anlagentypparameter, insbesondere einen Hersteller- und/oder Modellparameter, wenigstens einer zur additiven Fertigung des wenigstens einen additiv zu fertigenden Bauteils (2) zu verwendenden oder verwendeten additiven Fertigungseinrichtung (5), insbesondere alle Anlagentypparameter wenigstens einer zur additiven Fertigung des wenigstens einen additiv zu fertigenden Bauteils (2) zu verwendenden oder verwendeten additiven Fertigungseinrichtung (5), als anlagenspezifischen Parameter beinhaltet.
8. Verfahren nach einem der vorhergehenden Aspekte, wobei ein zertifizierter Datensatz bereitgestellt wird, welcher
   - wenigstens einen Baumaterialparameter wenigstens eines Baumaterials, welches von wenigstens einer zur additiven Fertigung des wenigstens einen additiv zu fertigenden Bauteils (2) zu verwendenden oder verwendeten additiven Fertigungseinrichtung (5) zur additiven Fertigung einsetzbar ist, insbesondere alle Baumaterialparameter wenigstens eines Baumaterials welches von wenigstens einer zur additiven Fertigung des wenigstens einen additiv zu fertigenden Bauteils (2) zu verwendenden oder verwendeten additiven Fertigungseinrichtung (5) zur additiven Fertigung einsetzbar ist, als prozessspezifischen Parameter beinhaltet, und/oder
   - wenigstens einen chemischen Prozessparameter, insbesondere chemische Atmosphäre, innerhalb wenigstens eines Bau- und/oder Prozessraums wenigstens einer zur additiven Fertigung des wenigstens einen additiv zu fertigenden Bauteils (2) zu verwendenden oder verwendeten additiven Fertigungseinrichtung (5), insbesondere alle chemischen Prozessparameter wenigstens eines Bau- und/oder Prozessraums wenigstens einer zur additiven Fertigung des wenigstens einen additiv zu fertigenden Bauteils (2) zu verwendenden oder verwendeten additiven Fertigungseinrichtung (5), als prozessspezifischen Parameter beinhaltet, und/oder
   - wenigstens einen physikalischen Prozessparameter, insbesondere Feuchtigkeit, Druck, Temperatur, außerhalb und/oder innerhalb wenigstens eines Bau- und/oder Prozessraums wenigstens einer zur additiven Fertigung des wenigstens einen additiv zu fertigenden Bauteils (2) zu verwendenden oder verwendeten additiven Fertigungseinrichtung (5), insbesondere alle physikalischen Prozessparameter wenigstens eines Bau- und/oder Prozessraums wenigstens einer zur additiven Fertigung des wenigstens einen additiv zu fertigenden Bauteils (2) zu verwendenden oder verwendeten additiven Fertigungseinrichtung (5), als prozessspezifischen Parameter beinhaltet, und/oder
   - wenigstens einen klimatischen Prozessparameter, insbesondere Feuchtigkeit, Druck, Temperatur, wenigstens einer Umgebung wenigstens einer zur additiven Fertigung des wenigstens einen additiv zu fertigenden Bauteils (2) zu verwendenden oder verwendeten additiven Fertigungseinrichtung (5), insbesondere alle klimatischen Prozessparameter wenigstens einer zur additiven Fertigung des wenigstens einen additiv zu fertigenden Bauteils (2) zu verwendenden oder verwendeten additiven Fertigungseinrichtung (5), als prozessspezifischen Parameter beinhaltet, und/oder
   - wenigstens einen eine Aufteilung des wenigstens einen additiv zu fertigenden Bauteils (2) in einzelne, jeweils einen Querschnitt des wenigstens einen additiv zu fertigenden Bauteil (2) beinhaltenden Schichten beschreibenden Schichtparameter, insbesondere alle eine Aufteilung des wenigstens einen additiv zu fertigenden Bauteils (2) in einzelne, jeweils einen Querschnitt des wenigstens einen additiv zu fertigenden Bauteil (2) beinhaltenden Schichten beschreibende Schichtparameter, als prozessspezifischen Parameter beinhaltet, und/oder
   - wenigstens einen Parameter, insbesondere einen geometrisch-konstruktiven Parameter und/oder einen Anordnungsparameter relativ zu einem zu stützenden additiv zu fertigenden oder gefertigten Bauteil (2), wenigstens eines zur Unterstützung des wenigstens einen additiv zu fertigenden oder gefertigten Bauteils dienenden Stützelements, insbesondere alle Parameter wenigstens eines zur Unterstützung des wenigstens einen additiv zu fertigenden oder gefertigten Bauteils (2) dienenden Stützelements, als prozessspezifischen Parameter beinhaltet, und/oder
   - wenigstens einen eine Baustrategie des wenigstens einen additiv zu fertigenden Bauteils (2) beschreibenden Baustrategieparameter, insbesondere alle eine Baustrategie des wenigstens einen additiv zu fertigenden Bauteils (2) beschreibenden Baustrategieparameter, als prozessspezifischen Parameter beinhaltet.
9. Verfahren nach einem der vorhergehenden Aspekte, wobei der zertifizierte Datensatz wenigstens einen geometrisch-konstruktiven Parameter wenigstens eines zur Unterstützung des wenigstens einen additiv zu fertigenden oder gefertigten Bauteils (2) dienenden Stützelements als prozessspezifischen Parameter beinhaltet, wobei
   das wenigstens eine Stützelement mit wenigstens einem ein Entfernen des wenigstens einen Stützelements von dem additiv gefertigten Bauteil (2) erleichternden Strukturelement, insbesondere einer Schwächung des wenigstens einen Stützelements, und/oder mit einer das zu entfernende Stützelement optisch hervorhebenden Kennzeichnung, versehen wird.
10. Verfahren nach einem der vorhergehenden Aspekte, wobei das Anwenden wenigstens eines additiven Fertigungsprozesses zur additiven Fertigung des wenigstens einen additiv zu fertigenden Bauteils (2) definierter Bauteileigenschaften auf Grundlage des wenigstens einen zertifizierten Datensatzes (4) vermittels einer nutzerseitigen additiven Fertigungseinrichtung (5) vollautomatisiert, insbesondere ohne einen nutzerseitigen Eingriff, erfolgt.
11. Verfahren nach einem der vorhergehenden Aspekte, umfassend Vergleichen wenigstens eines im Rahmen der additiven Fertigung des wenigstens einen additiv zu fertigenden Bauteils (2) definierter Bauteileigenschaften vermittels einer Erfassungseinrichtung (7) erfassten, die additive Fertigung des wenigstens einen additiv zu fertigenden Bauteils (2) betreffenden Parameters mit wenigstens einem, insbesondere korrespondierenden, Referenzparameter.
12. Verfahren nach Aspekt 11, umfassend Auswerten der Vergleichsinformation im Hinblick auf wenigstens ein Auswertekriterium, insbesondere dahin, ob dieses eine Über- oder Unterschreitung wenigstens eines parameterspezifischen Grenzwerts oder Grenzwertbereichs anzeigt.
13. Verfahren nach einem der vorhergehenden Aspekte, wobei der wenigstens eine zertifizierte Datensatz (4) seitens des Bereitstellers auf Grundlage von Informationen des Bereitstellers, insbesondere auf Grundlage seitens des Bereitstellers, bevorzugt unter definierten Fertigungsbedingungen, gegebenenfalls empirisch gewonnenen, Fertigungsergebnissen eines dem additiv zu fertigenden Bauteil (2) entsprechenden Referenzbauteils, erzeugt wird oder wurde.
14. Verfahren nach einem der vorhergehenden Aspekte, wobei der wenigstens eine zertifizierte Datensatz (4) seitens des Nutzers oder eines Dritten auf Grundlage von Informationen des Nutzers oder des Dritten, insbesondere auf Grundlage seitens des Nutzers oder des Dritten, bevorzugt unter definierten Fertigungsbedingungen, gegebenenfalls empirisch gewonnenen, Fertigungsergebnissen eines dem additiv zu fertigenden Bauteil (2) entsprechenden Referenzbauteils, erzeugt wird oder wurde, wobei
   die Informationen des Nutzers oder des Dritten durch den Bereitsteller im Hinblick auf wenigstens ein bereitstellerseitig vorgebbares oder vorgegebenes Autorisierungskriterium autorisiert werden und nur bei positiver Autorisierung durch den Bereitsteller als zertifizierter Datensatz (4) autorisiert werden.
15. Verfahren nach einem der vorhergehenden Aspekte, wobei der wenigstens eine zertifizierte Datensatz (4) eine bestimmte Anzahl an auf Grundlage des wenigstens einen zertifizierten Datensatzes (4) vermittels einer bestimmten additiven Fertigungsvorrichtung (5) möglichen additiven Fertigungsvorgängen beinhaltet.
16. Verfahren nach einem der vorhergehenden Aspekte, wobei der wenigstens eine zertifizierte Datensatz (4), insbesondere dessen Inhalt, von einem Nutzer nicht veränderbar ist.
17. Verfahren nach einem der vorhergehenden Aspekte, wobei der wenigstens eine zertifizierte Datensatz (4) verschlüsselt ist.
18. Verfahren nach einem der vorhergehenden Aspekte, wobei der wenigstens eine zertifizierte Datensatz (4) auf einem mit wenigstens einem Kommunikationsnetzwerk (11) verbindbaren oder verbundenen Server (10) bereitgestellt wird, von welchem er von einem Nutzer abgerufen werden kann oder wird.
19. Verfahren nach Aspekt 18, wobei der wenigstens eine zertifizierte Datensatz (4) von einem Nutzer abgerufen werden kann oder wird, sofern, insbesondere datenspeicherseitig, eine einen erfolgreichen Bezahlvorgang des Nutzers beschreibende Bezahlinformation vorliegt.
20. Verfahren nach Aspekt 18 oder 19, wobei der wenigstens eine zertifizierte Datensatz (4) auf ein nutzerseitiges Zugriffsportal (12) abgerufen wird oder werden kann.
21. Verfahren nach einem der vorhergehenden Aspekte, wobei der wenigstens eine zertifizierte Datensatz (4) und/oder ein nutzerseitiges Zugriffsportal (12), insbesondere als Plug-In-Lösung, auf einem portablen, an einen Nutzer aushändigbaren oder ausgehändigten Datenträger bereitgestellt wird, von welchem er von einem Nutzer abgerufen wird oder werden kann.
22. Verfahren nach einem der vorhergehenden Aspekte, wobei der wenigstens eine zertifizierte Datensatz (4) maschinenlesbare Steuerinformation zur, insbesondere vollautomatischen, Steuerung des Betriebs wenigstens einer additiven Fertigungseinrichtung (5) zur additiven Fertigung des wenigstens einen additiv zu fertigenden Bauteils (2) auf Grundlage des wenigstens einen zertifizierten Datensatzes (4) beinhaltet.
23. Verfahren nach einem der vorhergehenden Aspekte, wobei im Rahmen des Anwendens des wenigstens einen additiven Fertigungsprozesses zur additiven Fertigung des oder wenigstens eines Bauteils (2) definierter Bauteileigenschaften auf Grundlage des wenigstens einen zertifizierten Datensatzes (4) auf einer, insbesondere bereitstellerseitigen und/oder nutzerseitigen, Ausgabeeinrichtung (8) wenigstens eine den Status des jeweiligen additiven Fertigungsprozesses betreffende Statusanzeige erzeugt wird.
24. Verfahren nach einem der vorhergehenden Aspekte, wobei ein Bauteil (2), insbesondere ein Ersatz- oder Nachrüstteil, einer Verpackungsanlage zur Verpackung von Drittgegenständen additiv gefertigt wird.
25. Verfahren nach einem der vorhergehenden Aspekte, wobei wenigstens ein additiver Fertigungsprozess, insbesondere ein Fused-Deposition-Modelling ("FDM")-Prozess, angewendet wird, in welchem ein auf Kunststoff basierendes Baumaterial zur additiven Fertigung des wenigstens einen additiv zu fertigenden Bauteils (2) verwendet wird.
26. Verfahren zur Herstellung eines zertifizierten Datensatzes (4), welcher von einem Bereitsteller für die additive Fertigung wenigstens eines Bauteils definierter Bauteileigenschaften zertifizierte anlagenspezifische Parameter und/oder bauteilspezifische Parameter und/oder prozessspezifische Parameter beinhaltet, wobei der zertifizierte Datensatz (4) seitens des Bereitstellers auf Grundlage von Informationen des Bereitstellers, insbesondere auf Grundlage seitens des Bereitstellers, bevorzugt unter definierten Fertigungsbedingungen, empirisch gewonnenen Fertigungsergebnissen eines dem additiv zu fertigenden Bauteil (2) entsprechenden Referenzbauteils, erzeugt wird oder wurde, oder
   der zertifizierte Datensatz (4) seitens des Nutzers oder eines Dritten auf Grundlage auf von Informationen des Nutzers oder des Dritten, insbesondere auf Grundlage seitens des Nutzers oder des Dritten, bevorzugt unter definierten Fertigungsbedingungen, empirisch gewonnenen Fertigungsergebnissen eines dem additiv zu fertigenden Bauteil (2) entsprechenden Referenzbauteils, erzeugt wird oder wurde, wobei die Informationen des Nutzers oder des Dritten seitens des Bereitstellers im Hinblick auf wenigstens ein bereitstellerseitig vorgebbares oder vorgegebenes Autorisierungskriterium autorisiert werden und bei erfolgter Autorisierung durch den Bereitsteller als zertifizierter Datensatz (4) verwendet werden.
27. System (1) zur additiven Fertigung wenigstens eines Bauteils (2) definierter Bauteileigenschaften, umfassend
   - wenigstens eine einem Bereitsteller zugeordnete Bereitstellungseinrichtung (3), welche zum Bereitstellen wenigstens eines zertifizierten Datensatzes (4), welcher von dem Bereitsteller für die additive Fertigung wenigstens eines Bauteils (2) definierter Bauteileigenschaften zertifizierte anlagenspezifische Parameter und/oder bauteilspezifische Parameter und/oder prozessspezifische Parameter beinhaltet, eingerichtet ist,
   - wenigstens eine einem Nutzer zugeordnete additive Fertigungseinrichtung (5), welche zum Anwenden wenigstens eines additiven Fertigungsprozesses zur additiven Fertigung wenigstens eines Bauteils (2) definierter Bauteileigenschaften auf Grundlage des wenigstens einen zertifizierten Datensatzes (4) eingerichtet ist.

## Patentansprüche

1. Verfahren zur additiven Fertigung wenigstens eines Bauteils (2), insbesondere eines Ersatz- oder Nachrüstteils einer Verpackungsanlage zur Verpackung von Drittgegenständen, definierter Bauteileigenschaften, umfassend:
- Bereitstellen wenigstens eines zertifizierten Datensatzes (4), welcher von einem Bereitsteller für einen additiven Fertigungsprozess wenigstens eines bestimmten Bauteils (2) definierter Bauteileigenschaften zertifizierte bauteilspezifische Parameter und/oder anlagenspezifische Parameter und/oder prozessspezifische Parameter beinhaltet, wobei der wenigstens eine zertifizierte Datensatz (4) insbesondere maschinenlesbare Steuerinformation zur, insbesondere vollautomatischen, Steuerung des Betriebs wenigstens einer additiven Fertigungseinrichtung (5) zur additiven Fertigung des wenigstens einen additiv zu fertigenden Bauteils (2) auf Grundlage des wenigstens einen zertifizierten Datensatzes (4) beinhaltet,
- Anwenden wenigstens eines additiven Fertigungsprozesses zur additiven Fertigung wenigstens eines bestimmten Bauteils (2) definierter Bauteileigenschaften auf Grundlage des wenigstens einen zertifizierten Datensatzes (4).

2. Verfahren nach Anspruch 1, umfassend Bereitstellen des oder wenigstens eines zertifizierten Datensatzes (4'), welcher von einem Bereitsteller für die Vorbereitung eines additiven Fertigungsprozesses des oder wenigstens eines additiv zu fertigenden Bauteils (2) definierter Bauteileigenschaften zertifizierte anlagenspezifische Parameter und/oder bauteilspezifische Parameter und/oder prozessspezifische Parameter beinhaltet,
- Anwenden wenigstens einer Maßnahme zur Vorbereitung des oder wenigstens eines additiven Fertigungsprozesses zur additiven Fertigung des wenigstens einen additiv zu fertigenden Bauteils (2) definierter Bauteileigenschaften auf Grundlage des wenigstens einen zertifizierten Datensatzes (4'), wobei die die wenigstens eine Maßnahme zur Vorbereitung des additiven Fertigungsprozesses insbesondere eine Maßnahme zur Vorbereitung eines im Rahmen des zur additiven Fertigung eines Bauteils (2) bestimmter Bauteileigenschaften durchgeführten additiven Fertigungsprozesses zu verwendenden Baumaterials eine Temperierung und/oder Trocknung und/oder Inertisierung des Baumaterials umfasst; und/oder
Bereitstellen des oder wenigstens eines zertifizierten Datensatzes (4"), welcher von einem Bereitsteller für die Nachbereitung des oder wenigstens eines additiven Fertigungsprozesses wenigstens eines additiv gefertigten Bauteils (2) definierter Bauteileigenschaften zertifizierte anlagenspezifische Parameter und/oder bauteilspezifische Parameter und/oder prozessspezifische Parameter beinhaltet,
- Anwenden wenigstens einer Maßnahme zur Nachbereitung des oder wenigstens eines additiven Fertigungsprozesses zur additiven Fertigung des wenigstens einen additiv gefertigten Bauteils (2) definierter Bauteileigenschaften auf Grundlage des wenigstens einen zertifizierten Datensatzes (4"), wobei die wenigstens eine Maßnahme zur Nachbereitung des additiven Fertigungsprozesses insbesondere eine Maßnahme zur Nachbearbeitung des im Rahmen des additiven Fertigungsprozesses additiv gefertigten Bauteils (2) eine mechanische und/oder thermische Nachbehandlung des additiv gefertigten Bauteils (2) umfasst.

3. Verfahren nach einem der vorhergehenden Ansprüche, wobei ein zertifizierter Datensatz bereitgestellt wird, welcher
- wenigstens einen geometrisch-konstruktiven Parameter des wenigstens einen additiv zu fertigenden Bauteils (2), insbesondere alle geometrisch-konstruktiven Parameter des wenigstens einen additiv zu fertigenden Bauteils (2), als bauteilspezifischen Parameter beinhaltet, und/oder
- wenigstens einen chemischen Parameter des wenigstens einen additiv zu fertigenden Bauteils (2), insbesondere alle chemischen Parameter des wenigstens einen additiv zu fertigenden Bauteils (2), als bauteilspezifischen Parameter beinhaltet, und/oder
- wenigstens einen physikalischen Parameter des wenigstens einen additiv zu fertigenden Bauteils (2), insbesondere alle physikalischen Parameter des wenigstens einen additiv zu fertigenden Bauteils (2), als bauteilspezifischen Parameter beinhaltet.

4. Verfahren nach einem der vorhergehenden Ansprüche, wobei ein zertifizierter Datensatz bereitgestellt wird, welcher
- wenigstens einen Abmessungsparameter wenigstens eines Baufelds wenigstens einer zur additiven Fertigung des wenigstens einen additiv zu fertigenden Bauteils (2) zu verwendenden oder verwendeten additiven Fertigungseinrichtung (5), insbesondere alle Abmessungsparameter wenigstens eines Baufelds wenigstens einer zur additiven Fertigung des wenigstens einen additiv zu fertigenden Bauteils (2) zu verwendenden oder verwendeten additiven Fertigungseinrichtung (5), als anlagenspezifischen Parameter beinhaltet, und/oder
- wenigstens einen Abmessungsparameter wenigstens eines Bauvolumens wenigstens einer zur additiven Fertigung des wenigstens einen additiv zu fertigenden Bauteils (2) zu verwendenden oder verwendeten additiven Fertigungseinrichtung (5), insbesondere alle Abmessungsparameter wenigstens eines Bauvolumens wenigstens einer zur additiven Fertigung des wenigstens einen additiv zu fertigenden Bauteils (2) zu verwendenden oder verwendeten additiven Fertigungseinrichtung (5), als anlagenspezifischen Parameter beinhaltet, und/oder
- wenigstens einen Fertigungsparameter, insbesondere einen Bauratenparameter, wenigstens einer zur additiven Fertigung des wenigstens einen additiv zu fertigenden Bauteils (2) zu verwendenden oder verwendeten additiven Fertigungseinrichtung (5), insbesondere alle Fertigungsparameter wenigstens einer zur additiven Fertigung des wenigstens einen additiv zu fertigenden Bauteils (2) zu verwendenden oder verwendeten additiven Fertigungseinrichtung (5), als anlagenspezifischen Parameter beinhaltet,
- wenigstens einen Anlagentypparameter, insbesondere einen Hersteller- und/oder Modellparameter, wenigstens einer zur additiven Fertigung des wenigstens einen additiv zu fertigenden Bauteils (2) zu verwendenden oder verwendeten additiven Fertigungseinrichtung (5), insbesondere alle Anlagentypparameter wenigstens einer zur additiven Fertigung des wenigstens einen additiv zu fertigenden Bauteils (2) zu verwendenden oder verwendeten additiven Fertigungseinrichtung (5), als anlagenspezifischen Parameter beinhaltet.

5. Verfahren nach einem der vorhergehenden Ansprüche, wobei ein zertifizierter Datensatz bereitgestellt wird, welcher
- wenigstens einen Baumaterialparameter wenigstens eines Baumaterials, welches von wenigstens einer zur additiven Fertigung des wenigstens einen additiv zu fertigenden Bauteils (2) zu verwendenden oder verwendeten additiven Fertigungseinrichtung (5) zur additiven Fertigung einsetzbar ist, insbesondere alle Baumaterialparameter wenigstens eines Baumaterials welches von wenigstens einer zur additiven Fertigung des wenigstens einen additiv zu fertigenden Bauteils (2) zu verwendenden oder verwendeten additiven Fertigungseinrichtung (5) zur additiven Fertigung einsetzbar ist, als prozessspezifischen Parameter beinhaltet, und/oder
- wenigstens einen chemischen Prozessparameter, insbesondere chemische Atmosphäre, innerhalb wenigstens eines Bau- und/oder Prozessraums wenigstens einer zur additiven Fertigung des wenigstens einen additiv zu fertigenden Bauteils (2) zu verwendenden oder verwendeten additiven Fertigungseinrichtung (5), insbesondere alle chemischen Prozessparameter wenigstens eines Bau- und/oder Prozessraums wenigstens einer zur additiven Fertigung des wenigstens einen additiv zu fertigenden Bauteils (2) zu verwendenden oder verwendeten additiven Fertigungseinrichtung (5), als prozessspezifischen Parameter beinhaltet, und/oder
- wenigstens einen physikalischen Prozessparameter, insbesondere Feuchtigkeit, Druck, Temperatur, außerhalb und/oder innerhalb wenigstens eines Bau- und/oder Prozessraums wenigstens einer zur additiven Fertigung des wenigstens einen additiv zu fertigenden Bauteils (2) zu verwendenden oder verwendeten additiven Fertigungseinrichtung (5), insbesondere alle physikalischen Prozessparameter wenigstens eines Bau- und/oder Prozessraums wenigstens einer zur additiven Fertigung des wenigstens einen additiv zu fertigenden Bauteils (2) zu verwendenden oder verwendeten additiven Fertigungseinrichtung (5), als prozessspezifischen Parameter beinhaltet, und/oder
- wenigstens einen klimatischen Prozessparameter, insbesondere Feuchtigkeit, Druck, Temperatur, wenigstens einer Umgebung wenigstens einer zur additiven Fertigung des wenigstens einen additiv zu fertigenden Bauteils (2) zu verwendenden oder verwendeten additiven Fertigungseinrichtung (5), insbesondere alle klimatischen Prozessparameter wenigstens einer zur additiven Fertigung des wenigstens einen additiv zu fertigenden Bauteils (2) zu verwendenden oder verwendeten additiven Fertigungseinrichtung (5), als prozessspezifischen Parameter beinhaltet, und/oder
- wenigstens einen eine Aufteilung des wenigstens einen additiv zu fertigenden Bauteils (2) in einzelne, jeweils einen Querschnitt des wenigstens einen additiv zu fertigenden Bauteil (2) beinhaltenden Schichten beschreibenden Schichtparameter, insbesondere alle eine Aufteilung des wenigstens einen additiv zu fertigenden Bauteils (2) in einzelne, jeweils einen Querschnitt des wenigstens einen additiv zu fertigenden Bauteil (2) beinhaltenden Schichten beschreibende Schichtparameter, als prozessspezifischen Parameter beinhaltet, und/oder
- wenigstens einen Parameter, insbesondere einen geometrisch-konstruktiven Parameter und/oder einen Anordnungsparameter relativ zu einem zu stützenden additiv zu fertigenden oder gefertigten Bauteil (2), wenigstens eines zur Unterstützung des wenigstens einen additiv zu fertigenden oder gefertigten Bauteils dienenden Stützelements, insbesondere alle Parameter wenigstens eines zur Unterstützung des wenigstens einen additiv zu fertigenden oder gefertigten Bauteils (2) dienenden Stützelements, als prozessspezifischen Parameter beinhaltet, und/oder
- wenigstens einen eine Baustrategie des wenigstens einen additiv zu fertigenden Bauteils (2) beschreibenden Baustrategieparameter, insbesondere alle eine Baustrategie des wenigstens einen additiv zu fertigenden Bauteils (2) beschreibenden Baustrategieparameter, als prozessspezifischen Parameter beinhaltet.

6. Verfahren nach einem der vorhergehenden Ansprüche, wobei der zertifizierte Datensatz wenigstens einen geometrisch-konstruktiven Parameter wenigstens eines zur Unterstützung des wenigstens einen additiv zu fertigenden oder gefertigten Bauteils (2) dienenden Stützelements als prozessspezifischen Parameter beinhaltet, wobei das wenigstens eine Stützelement mit wenigstens einem ein Entfernen des wenigstens einen Stützelements von dem additiv gefertigten Bauteil (2) erleichternden Strukturelement, insbesondere einer Schwächung des wenigstens einen Stützelements, und/oder mit einer das zu entfernende Stützelement optisch hervorhebenden Kennzeichnung, versehen wird.

7. Verfahren nach einem der vorhergehenden Ansprüche, wobei das Anwenden wenigstens eines additiven Fertigungsprozesses zur additiven Fertigung des wenigstens einen additiv zu fertigenden Bauteils (2) definierter Bauteileigenschaften auf Grundlage des wenigstens einen zertifizierten Datensatzes (4) vermittels einer nutzerseitigen additiven Fertigungseinrichtung (5) vollautomatisiert, insbesondere ohne einen nutzerseitigen Eingriff, erfolgt.

8. Verfahren nach einem der vorhergehenden Ansprüche, umfassend Vergleichen wenigstens eines im Rahmen der additiven Fertigung des wenigstens einen additiv zu fertigenden Bauteils (2) definierter Bauteileigenschaften vermittels einer Erfassungseinrichtung (7) erfassten, die additive Fertigung des wenigstens einen additiv zu fertigenden Bauteils (2) betreffenden Parameters mit wenigstens einem, insbesondere korrespondierenden, Referenzparameter; optional ferner umfassend Auswerten der Vergleichsinformation im Hinblick auf wenigstens ein Auswertekriterium, insbesondere dahin, ob dieses eine Über- oder Unterschreitung wenigstens eines parameterspezifischen Grenzwerts oder Grenzwertbereichs anzeigt.

9. Verfahren nach einem der vorhergehenden Ansprüche, wobei der wenigstens eine zertifizierte Datensatz (4) seitens des Bereitstellers auf Grundlage von Informationen des Bereitstellers, insbesondere auf Grundlage seitens des Bereitstellers, bevorzugt unter definierten Fertigungsbedingungen, gegebenenfalls empirisch gewonnenen, Fertigungsergebnissen eines dem additiv zu fertigenden Bauteil (2) entsprechenden Referenzbauteils, erzeugt wird oder wurde.

10. Verfahren nach einem der vorhergehenden Ansprüche, wobei der wenigstens eine zertifizierte Datensatz (4) seitens des Nutzers oder eines Dritten auf Grundlage von Informationen des Nutzers oder des Dritten, insbesondere auf Grundlage seitens des Nutzers oder des Dritten, bevorzugt unter definierten Fertigungsbedingungen, gegebenenfalls empirisch gewonnenen, Fertigungsergebnissen eines dem additiv zu fertigenden Bauteil (2) entsprechenden Referenzbauteils, erzeugt wird oder wurde, wobei die Informationen des Nutzers oder des Dritten durch den Bereitsteller im Hinblick auf wenigstens ein bereitstellerseitig vorgebbares oder vorgegebenes Autorisierungskriterium autorisiert werden und nur bei positiver Autorisierung durch den Bereitsteller als zertifizierter Datensatz (4) autorisiert werden.

11. Verfahren nach einem der vorhergehenden Ansprüche, wobei der wenigstens eine zertifizierte Datensatz (4) eine bestimmte Anzahl an auf Grundlage des wenigstens einen zertifizierten Datensatzes (4) vermittels einer bestimmten additiven Fertigungsvorrichtung (5) möglichen additiven Fertigungsvorgängen beinhaltet; und/oder wobei der wenigstens eine zertifizierte Datensatz (4), insbesondere dessen Inhalt, von einem Nutzer nicht veränderbar ist; und/oder der wenigstens eine zertifizierte Datensatz (4) verschlüsselt ist..

12. Verfahren nach einem der vorhergehenden Ansprüche, wobei der wenigstens eine zertifizierte Datensatz (4) auf einem mit wenigstens einem Kommunikationsnetzwerk (11) verbindbaren oder verbundenen Server (10) bereitgestellt wird, von welchem er von einem Nutzer abgerufen werden kann oder wird, wobei der wenigstens eine zertifizierte Datensatz (4) insbesondere auf ein nutzerseitiges Zugriffsportal (12) abgerufen wird oder werden kann.

13. Verfahren nach einem der vorhergehenden Ansprüche, wobei der wenigstens eine zertifizierte Datensatz (4) und/oder ein nutzerseitiges Zugriffsportal (12), insbesondere als Plug-In-Lösung, auf einem portablen, an einen Nutzer aushändigbaren oder ausgehändigten Datenträger bereitgestellt wird, von welchem er von einem Nutzer abgerufen wird oder werden kann.

14. Verfahren zur Herstellung eines zertifizierten Datensatzes (4), welcher von einem Bereitsteller für die additive Fertigung wenigstens eines Bauteils definierter Bauteileigenschaften zertifizierte anlagenspezifische Parameter und/oder bauteilspezifische Parameter und/oder prozessspezifische Parameter beinhaltet, wobei der zertifizierte Datensatz (4) seitens des Bereitstellers auf Grundlage von Informationen des Bereitstellers, insbesondere auf Grundlage seitens des Bereitstellers, bevorzugt unter definierten Fertigungsbedingungen, empirisch gewonnenen Fertigungsergebnissen eines dem additiv zu fertigenden Bauteil (2) entsprechenden Referenzbauteils, erzeugt wird oder wurde, oder
der zertifizierte Datensatz (4) seitens des Nutzers oder eines Dritten auf Grundlage auf von Informationen des Nutzers oder des Dritten, insbesondere auf Grundlage seitens des Nutzers oder des Dritten, bevorzugt unter definierten Fertigungsbedingungen, empirisch gewonnenen Fertigungsergebnissen eines dem additiv zu fertigenden Bauteil (2) entsprechenden Referenzbauteils, erzeugt wird oder wurde, wobei die Informationen des Nutzers oder des Dritten seitens des Bereitstellers im Hinblick auf wenigstens ein bereitstellerseitig vorgebbares oder vorgegebenes Autorisierungskriterium autorisiert werden und bei erfolgter Autorisierung durch den Bereitsteller als zertifizierter Datensatz (4) verwendet werden.

15. System (1) zur additiven Fertigung wenigstens eines Bauteils (2) definierter Bauteileigenschaften, umfassend
- wenigstens eine einem Bereitsteller zugeordnete Bereitstellungseinrichtung (3), welche zum Bereitstellen wenigstens eines zertifizierten Datensatzes (4), welcher von dem Bereitsteller für die additive Fertigung wenigstens eines Bauteils (2) definierter Bauteileigenschaften zertifizierte anlagenspezifische Parameter und/oder bauteilspezifische Parameter und/oder prozessspezifische Parameter beinhaltet, eingerichtet ist, wobei der wenigstens eine zertifizierte Datensatz (4) insbesondere maschinenlesbare Steuerinformation zur, insbesondere vollautomatischen, Steuerung des Betriebs wenigstens einer additiven Fertigungseinrichtung (5) zur additiven Fertigung des wenigstens einen additiv zu fertigenden Bauteils (2) auf Grundlage des wenigstens einen zertifizierten Datensatzes (4) beinhaltet,
- wenigstens eine einem Nutzer zugeordnete additive Fertigungseinrichtung (5), welche zum Anwenden wenigstens eines additiven Fertigungsprozesses zur additiven Fertigung wenigstens eines Bauteils (2) definierter Bauteileigenschaften auf Grundlage des wenigstens einen zertifizierten Datensatzes (4) eingerichtet ist.
